# EUROPEAN PATENT SPECIFICATION

(11) **EP 3 932 023 B1**
(45) Date of publication and mention of the grant of the patent: **31.05.2023**
(21) Application number: 21728756.4
(22) Date of filing: 07.05.2021
(51) Int. Cl.: H04L 45/00, H04L 45/52

(54) **EVPN SIGNALING, NG-VPLS E-TREE SIGNALING, VPWS SIGNALING, AND L3VPN SIGNALING USING SEGMENT ROUTING OR MPLS**
EVPN SIGNALISIERUNG, NG-VPLS E-TREE SIGNALISIERUNG, VPWS SIGNALISIERUNG UND L3VPN SIGNALISIERUNG MITTELS SEGMENT-ROUTING ODER MPLS
SIGNALISATION EVPN, SIGNALISATION E-TREE NG-VPLS, SIGNALISATION VPWS, ET SIGNALISATION L3VPN À L'AIDE D'UN ROUTAGE DE SEGMENT OU DE MPLS

(30) Priority: 08.05.2020 US 202016870113; 31.08.2020 US 202017007084; 20.10.2020 US 202017075186; 22.10.2020 US 202017076881; 18.12.2020 US 202017126270
(43) Date of publication of application: 05.01.2022
(60) Divisional application: 23165907.9
(73) Proprietor: Ciena Corporation, Hanover, MD 21076 (US)
(72) Inventor: BOUTROS, Sami, Hanover, MD 21076 (US); SIVABALAN, Muthurajah, Hanover, MD 21076 (US); SHAH, Himanshu, Hanover, MD 21076 (US); HE, Peng, Hanover, MD 21076 (US); MEHTA, Pranav, Hanover, MD 21076 (US)
(74) Representative: Dehns
(86) International application number: PCT/US2021/031283
(87) International publication number: WO 2021/226451

(56) References cited:
- US-A1- 2018 324 090
- US-A1- 2018 375 968

## Description

The present disclosure claims priority to each of the following applications:

| U.S. Patent App. No. | Filing Date | Title |
|---|---|---|
| 16/870,113 | May 8, 2020 | EVPN signaling using Segment Routing |
| 17/007,084 | August 31, 2020 | NG-VPLS E-tree signaling using Segment Routing |
| 17/076,881 | October 22, 2020 | VPWS signaling using Segment Routing |
| 17/075,186 | October 20, 2020 | Optimized Layer 3 VPN Control Plane using Segment Routing |
| 17/126,270 | December 18, 2020 | Optimized L2/L3 services over classical MPLS transport |

### FIELD OF THE DISCLOSURE

The present disclosure generally relates to networking. More particularly, the present disclosure relates to systems and methods for Ethernet Virtual Private Network (EVPN) signaling, Next Generation Virtual Private LAN Service (NG-VPLS) E-tree signaling, Virtual Private Wire Service (VPWS) signaling, and Layer 3 Virtual Private Network (L3VPN) signaling, each using Segment Routing or Multiprotocol Label Switching (MPLS).

### BACKGROUND OF THE DISCLOSURE

An Ethernet-Tree (E-Tree) service is defined by Metro Ethernet Forum (MEF) as a Rooted-Multipoint Ethernet Virtual Connection (EVC) service. The Ethernet frames from a root node may be received by any other root node or leaf node, and the frames from a leaf node may be received by any root node but must not be received by a leaf node. The same E-tree can have multiple root nodes attached to the same Provider Edge (PE) or multiple PEs in the same E-tree Service. It is possible to realize E-Tree services using a VPLS on MPLS PWs. Historically, a Pseudo-Wire (PW) is a point-to-point (P2P) service between two network nodes. The PW context identifies both the service type and the service termination node in both control and data planes. In the present form, an ingress PE needs to maintain a PW per VPLS instance for each egress PE. So, assume 10000 VPLS instances over a network of 100 nodes, each node needs to setup and maintain approximately 1 million PWs which would easily become a scalability bottleneck with large scale deployment.

EVPN technology is replacing the legacy Pseudowire (PW) technology for Layer 2 (L2)-Virtual Private LAN (Local Area Network) Service (VPLS) and Virtual Private Wire Service (VPWS). EVPN is described, e.g., in RFC 7209, "Requirements for Ethernet VPN (EVPN)," May 2014, RFC 7432, "BGP MPLS-Based Ethernet VPN," February 2015, and RFC 8365, "A Network Virtualization Overlay Solution Using Ethernet VPN (EVPN)," March 2018. EVPN uses Border Gateway Protocol (BGP) signaling to establish the EVPN instance (EVI) with BGP Peers to offer a multipoint-to-multipoint L2 Ethernet service for a given client. EVPN relies on learning the Internet Protocol (IP) and Media Access Control (MAC) address binding of the locally connected Customer Edges (CEs) and distributing this information in the BGP EVPN Protocol Data Units (PDUs) to remote Provider Edges (PEs) that are members of the established EVPN instance. That is, conventionally, EVPN utilizes BGP for control plane-based learning. In particular, BGP utilizes an EVPN Network Layer Reachability Information (NLRI), which includes a Route Type field that details the encoding of the EVPN NLRI. The Route Types include 1 - Ethernet Auto-Discovery (A-D) route, 2 - MAC/IP Advertisement route, 3 - Inclusive Multicast Ethernet Tag route, and 4 - Ethernet Segment route.

While there are benefits to maintain control on what MAC addresses are advertised and processed by the EVPN instance members, the tradeoffs are a longer learning period, scalability concerns (EVI members learn all MAC addresses irrespective of their interest in holding only the MAC addresses their site is interested in communicating with), the reaction is slow related to MAC address movement and network failures, and the like. That is, control plane MAC learning is much slower than the fast data plane MAC learning available on switching technology today and reacts a lot slower to MAC moves and network failures.

BGP EVPN can be used for E-tree, but this approach to signal a leaf indication per MAC is costly both in the data plane and the control plane. Also, the BGP control plane MAC learning adds scale concerns to network devices, as all network devices attached to the same VPN through BGP will learn about all of the MAC addresses associated with that VPN. In an E-tree, the network devices only need the MAC addresses their site communicates with.

A Virtual Private Wire Service (VPWS) supports point-to-point services, appearing to an end customer like a leased line. Conventional implementations utilize Ethernet Virtual Private Network (EVPN) to implement VPWS, such as described in RFC 8214, "Virtual Private Wire Service Support in Ethernet VPN," August 2017. The conventional implementation of EVPN VPWS utilizes BGP overhead, including Route Distinguisher (RD) and Route Target (RT), for each EVPN route presenting a service. Of note, the existing overhead in EVPN VPWS is significant. Also, conventional EVPN VPWS does not benefit from Active/Active multihoming.

Also, Border Gateway Protocol (BGP)/Multiprotocol Label Switching (MPLS) VPN is described, for example, in RFC 2547, "BGP/MPLS VPNs," March 1999, RFC2547bis, "BGP/MPLS IP VPNs," October 2004, available online at tools.ietf.org/html/draft-ietf-l3vpn-rfc2547bis-03, RFC 4364, "BGP/MPLS IP Virtual Private Networks (VPNs)," February 2006, and RFC 4577, "OSPF as the Provider/Customer Edge Protocol for BGP/MPLS IP Virtual Private Networks (VPNs)," June 2006, RFC 6368, "Internal BGP as the Provider/Customer Edge Protocol for BGP/MPLS IP Virtual Private Networks (VPNs)," September 2011.

A BGP/MPLS VPN, i.e., a Layer 3 (L3) VPN (L3VPN), enables a service provider to use an Internet Protocol (IP) backbone to provide IP VPNs for customers. This approach uses a "peer model," in which the Customers' Edge (CE) routers send their routes to the Service Provider's Edge (PE) routers. BGP is then used by the service provider to exchange the routes of a particular VPN among the PE routers that are attached to that VPN. This is done in a way that ensures that routes from different VPNs remain distinct and separate, even if two VPNs have an overlapping address space. The PE routers distribute, to the CE routers in a particular VPN, the routes from other the CE routers in that VPN. The CE routers do not peer with each other; hence there is no "overlay" visible to the VPN's routing algorithm.

Disadvantageously, conventional L3VPNs require a significant control plane in terms of traffic, overhead, and operational complexity. Existing L3VPN mechanisms suffer from scale concerns as the number of VPN routes increases in the service provider network. Each L3VPN route (v4/v6) advertisement is prepended with an 8-byte Route Distinguisher (RD) to allow the IP address space to be reused by multiple VPNs. Each L3VPN route is associated with a set of extended communities, i.e., Route Targets (RTs). Each L3VPN route can be associated with other attributes such as local preferences, MED (Multi_EXIT_DISC attribute), color, etc. Each L3VPN route is associated with a tunnel encapsulation, i.e., MPLS label. Other prior art methods for Ethernet Virtual Private Network, EVPN, signalling in Segment Routing networks are disclosed by the patent publications US2018/324090A1 and US 2018/375968A1.

### BRIEF SUMMARY OF THE DISCLOSURE

The present disclosure relates to systems and methods for Ethernet Virtual Private Network (EVPN) signaling, Next Generation Virtual Private LAN Service (NG-VPLS) E-tree signaling, Virtual Private Wire Service (VPWS) signaling, and Layer 3 Virtual Private Network (L3VPN) signaling, each using Segment Routing or Multiprotocol Label Switching (MPLS).

### BRIEF DESCRIPTION OF THE DRAWINGS

The present disclosure is illustrated and described herein with reference to the various drawings, in which like reference numbers are used to denote like system components/method steps, as appropriate, and in which:
FIG. 1 is a network diagram of an example network including various nodes in a Segment Routing network as well as various Customer Edge (CE) nodes include two CE nodes in an Active/Active LAG configuration.
FIG. 2 is a block diagram of three example packets, with associated SIDs for illustrating the use of Segment Routing techniques to enable EVPN VPLS services without having to use the EVPN Route Types 1, 2, 3 and 4.
FIG. 3 is a block diagram of example packets for a broadcast and multicast frame sent by a single home PE node over Segment Routing.
FIG. 4 is a network diagram of the network illustrating data plane MAC.
FIG. 5 is a block diagram of example packets for data plane MAC learning.
FIG. 6 is a network diagram of the network illustrating Multi-Homed (MH) Ethernet Segment (ES) with the anycast SID.
FIG. 7 is a block diagram of example packets for illustrating transmissions in the network of FIG. 6.
FIG. 8 is a network diagram of the network illustrating mass withdrawal.
FIG. 9 is a network diagram of the network illustrating multi-pathing.
FIG. 10 is a flowchart of a process implemented by a node in a Segment Routing network.
FIG. 11 is a block diagram of an example implementation of a node, such as for the node in the network and the Segment Routing network.
FIG. 12 is a block diagram of an example controller.
FIG. 13 is a network diagram of the network of FIGS. 1, 4, 6, and 8-9 with an E-tree service for illustrating service discovery using Segment Routing signaling.
FIG. 14 is a network diagram of the network of FIG. 13 with the E-tree service for illustrating A/A redundancy using an anycast SID.
FIG. 15 is a network diagram of the network of FIGS. 13 and 14 with an E-tree service for illustrating a data plane MAC learning mechanism.
FIG. 16 is a network diagram of the network of FIGS. 13 - 15 with the E-tree services for illustrating an ARP suppression mechanism.
FIG. 17 is a network diagram of the network of FIGS. 13 - 16 with the E-tree service for illustrating service mass withdrawal.
FIG. 18 is a network diagram of the network of FIGS. 13 - 17 with the E-tree service for illustrating ECMP multi-pathing.
FIG. 19 is a flowchart of a process implemented by a node in a Segment Routing network for supporting an E-tree service.
FIG. 20 is a flowchart of a Segment Routing VPWS process.
FIG. 21 is a flowchart of a Segment Routing L3VPN process.
FIG. 22 is a flowchart of a process for optimized L2/L3 services over a classical MPLS network.

### DETAILED DESCRIPTION OF THE DISCLOSURE

This invention is defined by the appended claims. The present disclosure relates to systems and methods for Ethernet Virtual Private Network (EVPN) signaling, Next Generation Virtual Private LAN Service (NG-VPLS) E-tree signaling, Virtual Private Wire Service (VPWS) signaling, and Layer 3 Virtual Private Network (L3VPN) signaling, each using Segment Routing or Multiprotocol Label Switching (MPLS).

In an embodiment, the present disclosure relates to systems and methods for Next Generation Virtual Private LAN Service (NG-VPLS) E-tree signaling using Segment Routing. NG-VPLS is the next generation implementation of VPLS and it can be utilized to support E-tree services using Segment Routing, to overcome the limitations of existing E-tree implementations with either VPLS over MPLS PWs or via BGP EVPN.

In one aspect, the present disclosure relates to a method, a network element, a network and a computer program product for Ethernet Virtual Private Network (EVPN) signaling using Segment Routing. Specifically, the present disclosure includes a simplification to the BGP overhead of the EVPN control plane, especially for MAC address distribution by leveraging data plane MAC address learning, using Segment Routing. The approach described herein maintains the benefits of EVPN, such as multi-active redundancy, multi-pathing in the core, auto-provisioning, and auto-discovery. Specifically, the present disclosure utilizes Segment Routing techniques to enable EVPN VPLS services without the need for EVPN Route Types 1, 2, 3 and 4 in BGP. The present disclosure utilizes various Segment Identifiers (SID) to enable MAC learning via the data plane instead of the control plane, providing fast convergence and scale through conversational learning. The present disclosure further utilizes an anycast SID to maintain the benefit of Active/Active (A/A) multihoming and multipathing offered by EVPN. Also, the present disclosure maintains auto-discovery and single side provisioning of the service.

In a further embodiment, the present disclosure relates to systems and methods for Virtual Private Wire Service (VPWS) signaling using Segment Routing. Specifically, the present disclosure utilizes Segment Routing for VPWS to greatly reduce the BGP overhead of the existing EVPN VPWS control plane by at least two orders of magnitude. The present disclosure utilizes a Segment Identifier (SID) label stack for a Point-to-Point (P2P) VPWS service between two network nodes. The SID label stack includes a destination node SID, a P2P service SID, and an optional Flexible Cross Connect (FXC) normalized Virtual Local Area Network Identifier (VID). In addition to a significant reduction in the overhead, the present disclosure includes bringing the benefit of A/A multihoming and multipathing for an MH site. This approach leverages the benefits of a Segment Routing anycast SID, for redundancy and fast convergence and to discover nodes sharing the same anycast SID to perform Designated Forwarder (DF) election, with no need at all for implementing any sort of convergence and redundancy at the overlay (EVPN/BGP or LDP) layer. Also, the present disclosure supports auto-discovery and single-sided service provisioning.

In a further embodiment, the present disclosure relates to systems and methods for an optimized Layer 3 Virtual Private Network (VPN) control plane using Segment Routing, i.e., SR-optimized L3VPN. The present disclosure maintains the existing L3VPN semantics to (1) allow overlapping IP addresses to be used across multiple VPNs and (2) associate routes with attributes. Further, the present disclosure allows service providers to represent an L3VPN instance by one or more globally allocated service Segment Identifiers (SID(s)). The VPN route import/export is governed by the SID and allows the operator to deploy extranet, hub-and-spoke, and mesh VPN topologies. RT-based import/export can also be used to support non-mesh L3VPN sites. Also, the present disclosure provides Active/Active (A/A) redundancy and multipathing using Segment Routing Anycast SIDs for Multi-Homed (MH) L3VPN sites. Advantageously, the proposed approach significantly reduces the BGP overhead for L3VPN control planes by at least two orders of magnitude and, in mesh deployments, by up to four orders of magnitude. At the same time, the proposed approach does not compromise the desired benefits of L3VPN and EVPN prefix advertisements (RT-5), such as support of multi-active redundancy on access, multi-pathing in the core, auto-provisioning and auto-discovery.

In yet another embodiment, the present disclosure relates to systems and methods for optimized Layer 2 (L2)/Layer 3 (L3) services over classical Multiprotocol Label Switching (MPLS) transport. The approach described herein utilizes Internet Protocol (IP) addresses for data plane Media Access Control (MAC) learning as well as for identifying Broadcast, Unknown Unicast, and Multicast (BUM) traffic. The use of the IP addresses is in contrast to the use of Segment Identifiers (SID) in the SR approach. As such, the approach in the present disclosure provides the capability to enjoy the benefits of the new L2 and L3 service models covering ELAN, ETREE, ELINE/FXC and L3VPN over a classical MPLS network. An operator need only upgrade the edge nodes. The mechanisms described herein provide an ability to realize ELAN, ETREE, ELINE/FXC, and L3VPN in a scalable and simpler manner over legacy MPLS transport without the need to migrate their network to SR. The present disclosure provides the same benefits as the SR approach. Specifically, the use of IP addresses for MAC learning via the data plane instead of the control plane provides fast convergence and scale through conversational learning. The present disclosure further utilizes maintains the benefit of Active/Active (A/A) multihoming and multipathing offered by EVPN. Also, the present disclosure maintains auto-discovery and single side provisioning of the service. Further, the present disclosure greatly reduces the overhead of the existing control plane by at least two orders of magnitude.

### Acronyms

The following acronyms, abbreviations, and definitions are utilized herein:

| | |
|---|---|
| A/A | Active/Active; used synonymously with all-active when a CE is multi-homed to two or more PEs |
| A/S | Active/Standby |
| ARP | Address Resolution Protocol |
| BGP | Border Gateway Protocol |
| BGP-LU | BGP Labeled Unicast |
| BGP PIC | BGP Prefix Independent Convergence |
| BUM | Broadcast, Unknown, and Multicast |
| CE | Customer Edge |
| DF | Designated Forwarder; DF algorithm is used on MH (PE) peers to elect DF for each VLAN |
| DMAC | Destination MAC |
| DP | Data Plane |
| EAD | Ethernet Auto Discovery Route |
| ECMP | Equal Cost Multi-Path |
| ES | Ethernet Segment; when a CE is MH to PEs via a LAG, MH (PE) peers identify LAG interface as Ethernet Segment |
| E-Tree | Ethernet Tree |
| EVPN | Ethernet VPN |
| EVI | Ethernet VPN Instance |
| FXC | Flexible Cross Connect |
| IGP | Interior Gateway Protocol |
| IP | Internet Protocol |
| L3 | Layer 3 |
| L3VPN | Layer 3 Virtual Private Network |
| LAG | Link Aggregation Group |
| LAN | Local Area Network |
| LDP | Label Distribution Protocol |
| LSP | Label Switched Path |
| MAC | Media Access Control |
| MED | Multi_EXIT_DISC attribute |
| MH | Multi-home |
| mp2mp | Multipoint-to-Multipoint |
| p2mp | Point-to-Multipoint |
| MPLS | Multiprotocol Label Switching |
| NG-VPLS | Next Generation Virtual Private LAN Service |
| NG-VPWS | Next Generation Virtual Private Wire Service |
| PE | Provider Edge |
| PW | Pseudowire |
| RT | Route Target; EVPN uses BGP RTs with import/export policy to form EVI member group |
| SAFI | Subsequent Address Family Identifiers |
| SH | Split Horizon |
| SID | Segment Identifier |
| SMAC | Source MAC |
| SRGB | Segment Routing Global Block |
| SRGB | Segment Routing Global Block |
| TLV | Type-Length-Value |
| uSID | Micro SID, SRv6 uSID |
| UCMP | Unequal Cost Multipath |
| UNI | User-Network Interface |
| VID | VLAN Identifier |
| VLAN | Virtual Local Area Network |
| VPLS | Virtual Private LAN Service |
| VPN | Virtual Private Network |
| VPWS | Virtual Private Wire Service |
| VRF | Virtual Routing and Forwarding |
| Leaf | A node in an E-Tree that is allowed to communicate only to Root nodes |
| Root | A node in an E-Tree that is allowed to communicate to other Root and Leaf nodes |

### Segment Routing Overview

In loose source routing such as Segment Routing, a source node chooses a path and encodes the chosen path in a packet header as an ordered list of segments. The rest of the network executes the encoded instructions without any further per-flow state. Segment Routing provides full control over the path without the dependency on network state or signaling to set up a path. This makes Segment Routing scalable and straightforward to deploy. Segment Routing (SR) natively supports both IPv6 (SRv6) and MPLS (SR-MPLS) forwarding planes and can coexist with other transport technologies, e.g., Resource Reservation Protocol (RSVP)-Traffic Engineering (RSVP-TE) and Label Distribution Protocol (LDP).

In Segment Routing, a path includes segments which are instructions a node executes on an incoming packet. For example, segments can include forward the packet according to the shortest path to the destination, forward through a specific interface, or deliver the packet to a given application/service instance). Each segment is represented by a Segment Identifier (SID).

In SR-MPLS, all SIDs are allocated from a Segment Routing Global Block (SRGB) with domain-wide scope and significance, or from a Segment Routing Local Block (SRLB) with local scope. The SRGB includes the set of global segments in the SR domain. If a node participates in multiple SR domains, there is one SRGB for each SR domain. In SR-MPLS, SRGB is a local property of a node and identifies the set of local labels reserved for global segments. In SRv6, the SRGB is the set of global SRv6 SIDs in the SR domain.

A segment routed path is encoded into the packet by building a SID stack that is added to the packet. These SIDs are popped by processing nodes, and the next SID is used to decide forwarding decisions. A SID can be one of the following types an adjacency SID, a prefix SID, a node SID, a binding SID, and an anycast SID. Each SID represents an associated segment, e.g., an adjacency segment, a prefix segment, a node segment, a binding segment, and an anycast segment.

An adjacency segment is a single-hop, i.e., a specific link. A prefix segment is a multi-hop tunnel that can use equal-cost multi-hop aware shortest path links to reach a prefix. A prefix SID can be associated with an IP prefix. The prefix SID can be manually configured from the SRGB and can be distributed by ISIS or OSPF. The prefix segment steers the traffic along the shortest path to its destination. A node SID is a special type of prefix SID that identifies a specific node. It is configured under the loopback interface with the loopback address of the node as the prefix. A prefix segment is a global segment, so a prefix SID is globally unique within the segment routing domain. An adjacency segment is identified by an adjacency SID, which represents a specific adjacency, such as egress interface, to a neighboring router. The adjacency SID is distributed by ISIS or OSPF. The adjacency segment steers the traffic to a specific adjacency.

An anycast segment is a type of prefix segment that represents an anycast group. An anycast segment/SID is used for policies or protection. When forwarding traffic to an anycast SID, a node processing the forwarding will pick a device from the anycast group, which is the closest. If the closest device from the anycast group goes away, traffic will automatically switch to the next closest device in the anycast group.

SR-MPLS utilizes MPLS labels for the SID, whereas SRv6 utilizes an IPv6 address for a SID, i.e., when an SRv6 SID is in the Destination Address field of an IPv6 header of a packet, it is routed through an IPv6 network as an IPv6 address. Note, various example embodiments described herein are presented with reference to SR-MPLS, but those skilled in the art will recognize SRv6 is also contemplated.

A multicast SID represents a multicast segment that denotes the replication of the received packet. The implied interpretation of the Ethernet frame with multicast SID is that the received frame is of type BUM.

A service SID represents an EVPN service instance. It is an absolute MPLS label value that uniquely identifies an EVPN instance and is configured on all the PEs that are member of that EVPN instance.

A broadcast service SID identifies the received packet on the service as BUM. It is an absolute MPLS label value and is configured on all the PEs that are member of that EVPN instance.

A broadcast node SID is advertised by a node that identifies the BUM Ethernet payload. The broadcast node SID is common for all the EVPN instances configured on that node. All the SR nodes, identifies and processes this SID, same as node SID. The broadcast node SID is interchangeably referred to as "destination SID for BUM" or as "broadcast SID" in this document.

### EVPN utilizing SR

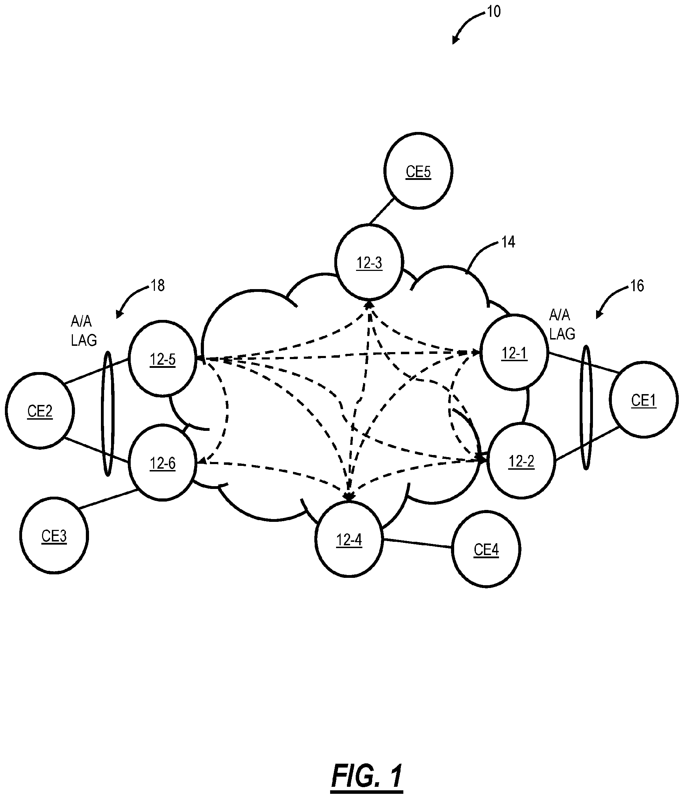

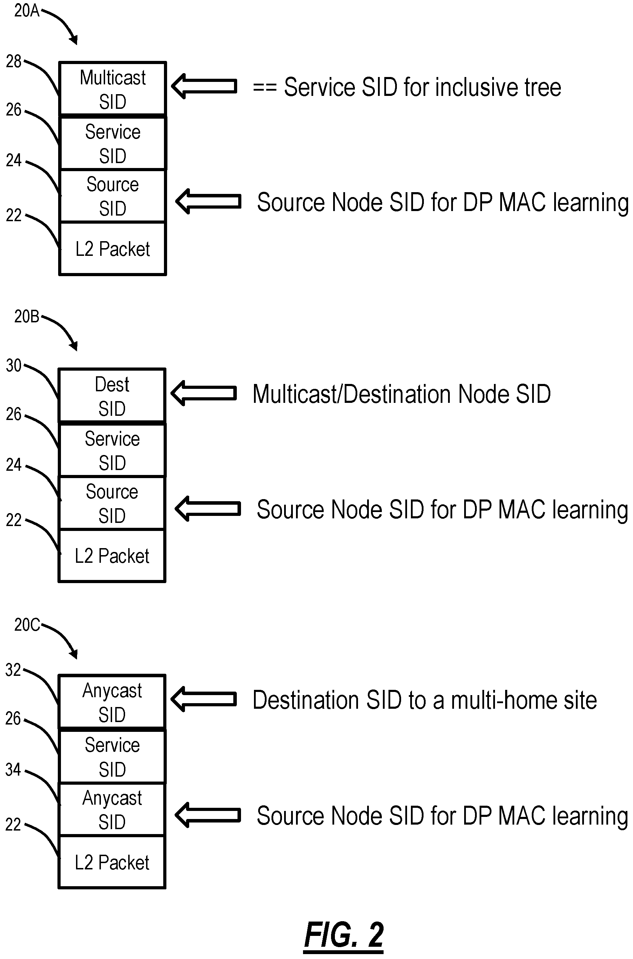

FIG. 1 is a network diagram of an example network 10 including various nodes 12 (labeled as nodes 12-1 - 12-6) in a Segment Routing network 14 as well as various Customer Edge (CE) nodes (labeled CE1 - CE5) include two CE nodes CE1, CE2 in an Active/Active LAG 16, 18 configuration. FIG. 2 is a block diagram of example packets 20A, 20B, 20C, with associated SIDs for illustrating the use of Segment Routing techniques to enable EVPN VPLS services without having to use the EVPN Route Types 1, 2, 3 and 4. That is, PE nodes 12 are configured to use SIDs associated with Segment Routing for MAC learning (i.e., which source (CE) MAC address in the received L2 packet is associated with which PE node (Source SID)), instead of using the EVPN Route Types 1, 2, 3 and 4. The present disclosure utilizes various SIDs on a label stack on a Layer 2 (L2) packet 22 for an EVPN, including:
a first SID at the bottom of a label stack that is a source node SID 24 and is used for data plane MAC learning. The source node SID 24 can be a node SID or anycast SID. The source SID 24 is used by a remote node 12 for data plane MAC learning.
a service SID 26 that identifies the EVPN instance (EVI) and is configured on all the PEs nodes 12 that are members of the same EVI;
a multicast SID 28, that identifies the broadcast domain of the EVI is used when sending L2 packet with unknown unicast DMAC, Broadcast and Multicast DMAC;
a multicast SID 28, a destination SID 30, or an anycast SID 32 at the top of the label stack,

The service SID 26 and the broadcast service SID are distributed within IGP/BGP to all PE nodes 12. Each member PE node 12 records the received service SIDs along with node SID 24 of the advertising PE nodes 12.

When a CE is multi-homed (MH) to PE nodes 12 (identified by Ethernet Segment), each multi-homed PE also advertises the Anycast SID that represents the attached Ethernet Segment (ES). Instead of EVPN Route Type 4, the advertisement of anycast SID is used amongst MH PE peers to utilize the Designated Forwarder algorithm that elects forwarder for each VLAN present on the ES. This mechanism prevents looping and duplicates for BUM packets to MH CE.

The nodes 12 learn CE MAC addresses from the passing data frames, i.e., from connected CE at local PE: SMAC to Attachment Circuit, and from the L2 packet received over the tunnel at remote PE: SMAC to source SID or Anycast SID.

### SR-EVPN-VPLS service with data plane mac learning - Service auto-discovery, building mp2mp tree for flooding

In FIG. 1, again, there is no Route Type 1, 2, 3, 4 needed, and services are auto-discovered. The same EVPN service SID 26 is configured on all EVI members, i.e., the nodes 12-1 - 12-6, and this service SID 26 is distributed via IGP/BGP. Each PE node 12 discovers peer PE nodes 12 and what EVIs they are a member of. That is, the nodes 12-1 - 12-6 will flood to IGP/BGP control plane the service SIDs they are configured with. The flooding information can be used to discover what node 12 is configured with what service, as well, can help build an mp2mp flooding tree for L2. For BUM traffic, there are various options including 1) an EVPN with all PE nodes 12: inclusive mp2mp flooding tree using the multicast SID 28, 2) ingress replication to each EVI member PE node 12 using per PE node broadcast SID for BUM traffic distributed by the PE nodes 12 using IGP/BGP, and 3) service discovery can also be used to build multicast SR tunnel per EVI or for all EVIs using multicast SID as per option 1. For unknown unicast, the receiver does not know whether sender sent the packet as broadcast (ingress replication), so a non-DF receiver would send the packet to same CE causing duplicate packets. In this case, sender must either use a broadcast service SID or broadcast SID so the receiver can discriminate as such and only DF send the packet towards CE.

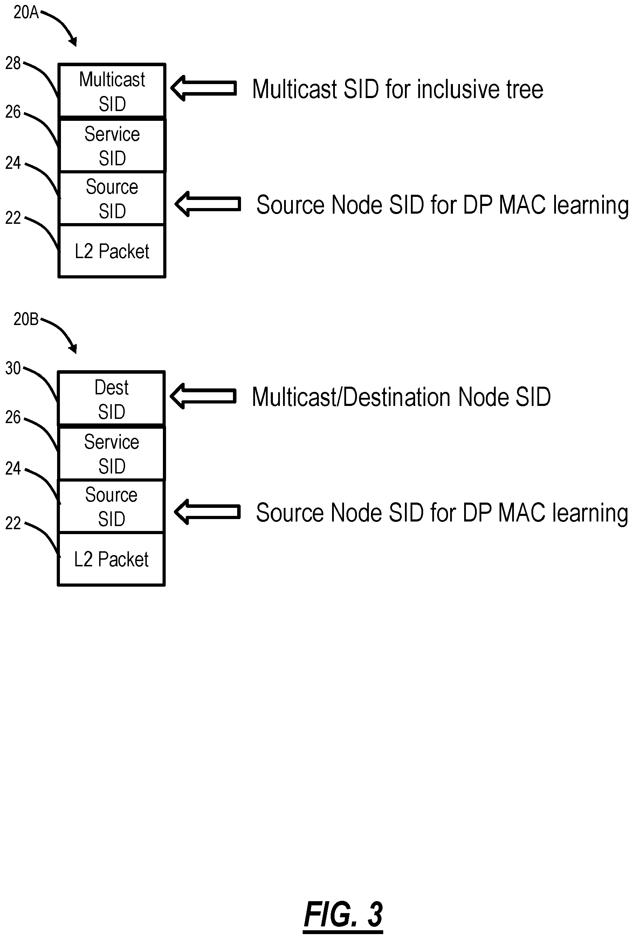

FIG. 3 is a block diagram of example packets 20A, 20B for a broadcast, and a multicast frame sent by a single home PE node 12 over Segment Routing. The packet 20A includes the multicast SID 28 for an inclusive tree for BUM traffic. The packet 20B includes the destination SID 30 for BUM (i.e., broadcast SID) when the destination MAC is unknown unicast. The source SID 24 after the service SID 26 is necessary for the receiver to learn the source MAC address (from L2 packet) associated with sending PE (i.e., source SID). A broadcast SID is the "destination SID for BUM" is something that all IGP nodes will have to know and have a forwarding entry/SPF based.

Again, for BUM traffic, there are a few options. Ingress replication, and in order to support this case, each node 12 can advertise a broadcast service SID per EVPN instance in IGP or BGP similar to the service SID per EVPN instance for unicast traffic, or one common Broadcast SID per node 12 for all EVPN instances (that the node 12 is a member of), this will be treated like a node SID. Now the ingress node 12 when replicating BUM traffic will use this broadcast service SID instead of the service SID per EVPN instance when sending the packet to the egress nodes 12. So the stack of SIDs will be [Destination SID, Broadcast service SID, Source SID] for each replicated packet to a given destination (egress node 12). For a common broadcast SID, the stack will be [Broadcast node SID, Service SID, Source SID] for each replicated packet, notice that the Broadcast node SID is replacing the destination SID. Also, it is possible to use the Multicast SID, and in that case, the stack of SIDs will be [Multicast SID, Service SID, Source SID], notice that Multicast SID here is replacing the destination SID.

### SR-EVPN-VPLS service with data plane MAC learning example

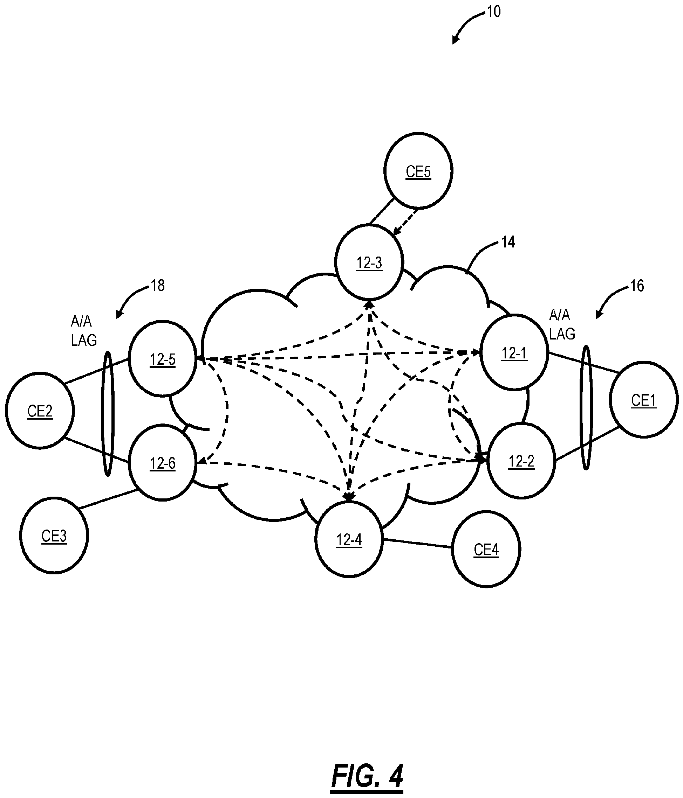

FIG. 4 is a network diagram of the network 10 illustrating data plane MAC. The CE MAC addresses are learned by nodes 12 through the data plane against the source node SID 24 that is encapsulated under the service SID 26. In this example of FIG. 4, the node 12-3 will learn the CE5 MAC address and flood this MAC address to all other nodes 12-1, 12-2, 12-4, 12-5, 12-6. The nodes 12-1, 12-2, 12-4, 12-5, 12-6 will learn the MAC address of the CE5 as reachable via the source node SID 24 owned by the node 12-3. In this example of FIG. 4, the node 12-3 will learn the CE5 MAC address via a L2 packet received from CE5 and if the DMAC in the L2 packet is unknown to the node 12-3, it will indirectly flood this CE5 MAC address to all other nodes 12-1, 12-2, 12-4, 12-5, 12-6 via ingress replication or with a multicast SID mechanism as described later. The nodes 12-1, 12-2, 12-4, 12-5, 12-6 will learn the MAC address of the CE5 as reachable via the source node SID 24 owned by the node 12-3.

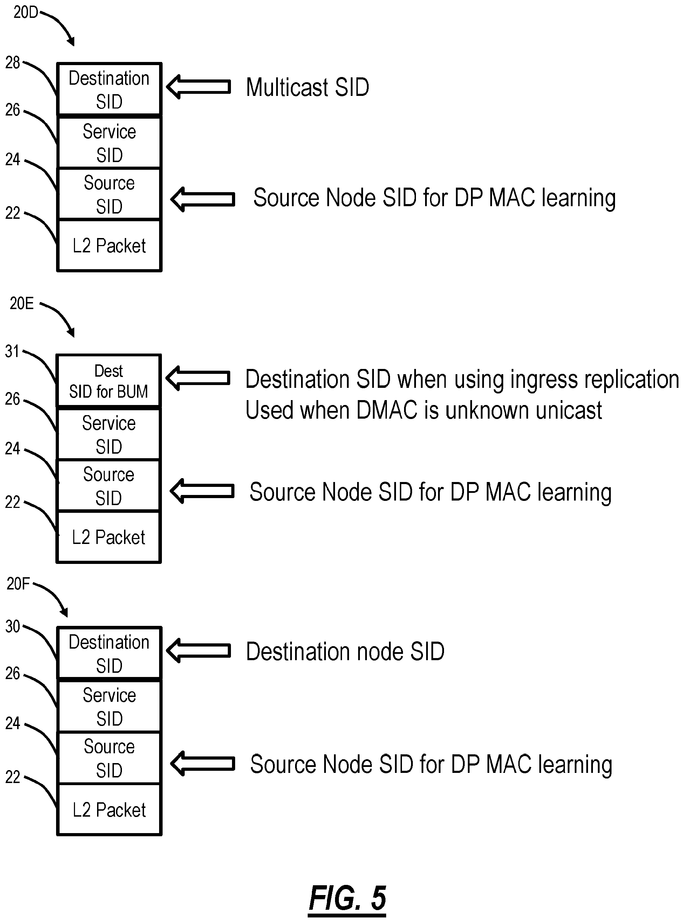

FIG. 5 is a block diagram of example packets 20D, 20E, 20F for data plane MAC learning. The topmost SID is either the multicast SID 28 if the DMAC is BUM and the Segment Routing multicast tree has been built, or, destination SID 30 for BUM when the DMAC is BUM and ingress replication is used, or, it is the destination SID 31 if the DMAC is known unicast with a learned association of the SID and MAC.

### SR-EVPN-VPLS service with data plane MAC learning - Presenting Multi-Homed Ethernet Segment with anycast SID

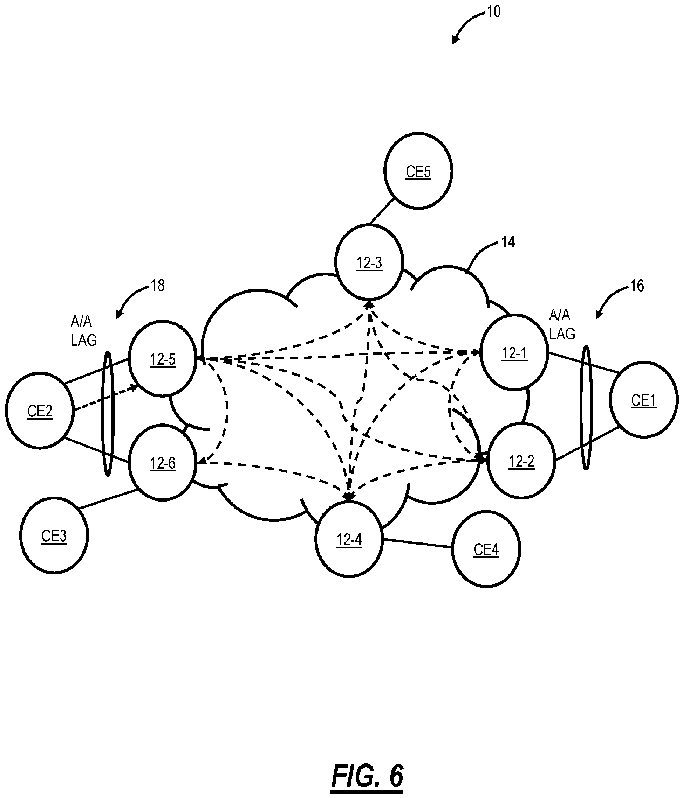

FIG. 6 is a network diagram of the network 10 illustrating Multi-Homed (MH) Ethernet Segment (ES) with the anycast SID 32. In this example, the node CE1 is multi-homed connected to the PE nodes 12-1, 12-2, via A/A LAG 16 is sending packets to CE2 that is multi-homed and connected to the PE nodes 12-5, 12-6, via the A/A LAG 18. To achieve A/A MH, the present disclosure utilizes the anycast SID 32 on top of the label stack and an anycast SID 34 instead of the source SID 24 on the bottom of the label stack, as illustrated in the packet 20C in FIG. 2. The anycast SID 32, 34 per Ether Segment is flooded by IGP/BGP for reachability through the set of nodes 12-5, 12-6 connected to the Multi-Home (MH) site. Aliasing/Multi-pathing in EVPN are achieved using similar mechanisms used for an anycast SID in Segment Routing. Aliasing is where a node, such as the node 12-1 wants to forward a packet to the node CE2; it may send it to either the PE nodes 12-5, 12-6 even though it may have only learned of the node CE2 from the PE node 12-5. Similarly, multi-pathing is where that packet from the node 12-1 is forwarded to either of the PE nodes 12-5, 12-6.

The anycast SID 32, 34 in Segment Routing represents a group where any member of the group can process the received frame. The present disclosure uses the anycast SID 32, 34 to identify MH PE peers connected to the same ES to denote when a MAC address is learned from an ES and if a sender uses the anycast SID 32 as the destination SID, any one of the MH PE nodes 12-5, 12-6 can forward the frame to the locally connected CE2. In FIG. 6, node 12-3 will learn the CE2's MAC address via the any cast SID 32 even if the CE's MAC was only learned by the node 12-5. When the CE5 connected to the node 12-3 sends the frame to the CE2 connected to the nodes 12-5, 12-6, it uses the anycast SID 32 as the destination SID. Segment Routing will determine which node 12-5, 12-6 is more suitable (based on shorter distance or ECMP) and send the frame to either of the nodes 12-5, 12-6. Again, this is called Aliasing and Multi-pathing

For MAC learning with the anycast SID 32, if DMAC is unknown, the node 12-5 floods the frame using either ingress replication or with a multicast SID. The node 12-5 receives a L2 packet from CE2 with a DMAC in the L2 packet unknown to the node 12-5. Every receiver (node 12), including the node 12-6, will record the association of SMAC with the source anycast SID 32. If the node 12-5 floods a packet to the node 12-6, the node 12-6 will not forward it to the CE2 associated with the anycast SID 32 given that the source anycast SID is owned by the node 12-6 as well. The node 12-5 will learn the CE2 MAC, and flood the MAC to all nodes 12 including the node 12-6, each node 12 will learn the CE2 MAC as reachable via the anycast SID 32 owned by the nodes 12-5, 12-6. The same learning is also applied when the DMAC is known to node 12-5 and sent to a specific destination node 12.

When the node 12-6 receives this frame, it recognizes based on the source anycast SID 32 that it is also connected to the same Ethernet Segment and hence will not forward the frame to the CE2 on that ES. That is, the node 12-6, will apply split-horizon and will not send the packet back to the MH CE2, but will program the CE2 MAC as reachable via the MH peer PE (node 12-5). On a link failure between the node 12-6 and CE2, the node 12-6 can send the received L2 packet from the Segment Routing network 14 to the node 12-5 or other nodes connected to the MH CE2, for fast convergence until it withdraws the anycast SID associated with the MH site. This is called Split Horizon and prevents duplication and looping of the frames.

Also, for fast convergence, if the link between the node 12-6 and the CE2 is broken, the node 12-6 will withdraw the anycast SID 32 in IGP flooding. In the meantime, the frames targeted to the node 12-6 destined for the CE2 connected to the ES, is forwarded to the node 12-5 by the node 12-6, incurring no service loss. There is no change on all the remote nodes 12-1, 12-2, 12-3, 12-4 because MAC addresses were learned based on the anycast SID 32 and the node 12-5 is still the member of that anycast SID 32, the frames destined to the anycast SID 32 will now arrive only at the node 12-5. There is no MAC withdrawal or flushing per se until all MH peers have withdrawn the anycast SID 32 (in FIG. 6, the nodes 12-5, 12-6). All the learned MAC addresses on the anycast SID 32 may be flushed when both the nodes 12-5, 12-6 withdraw the anycast SID 32 due to down links.

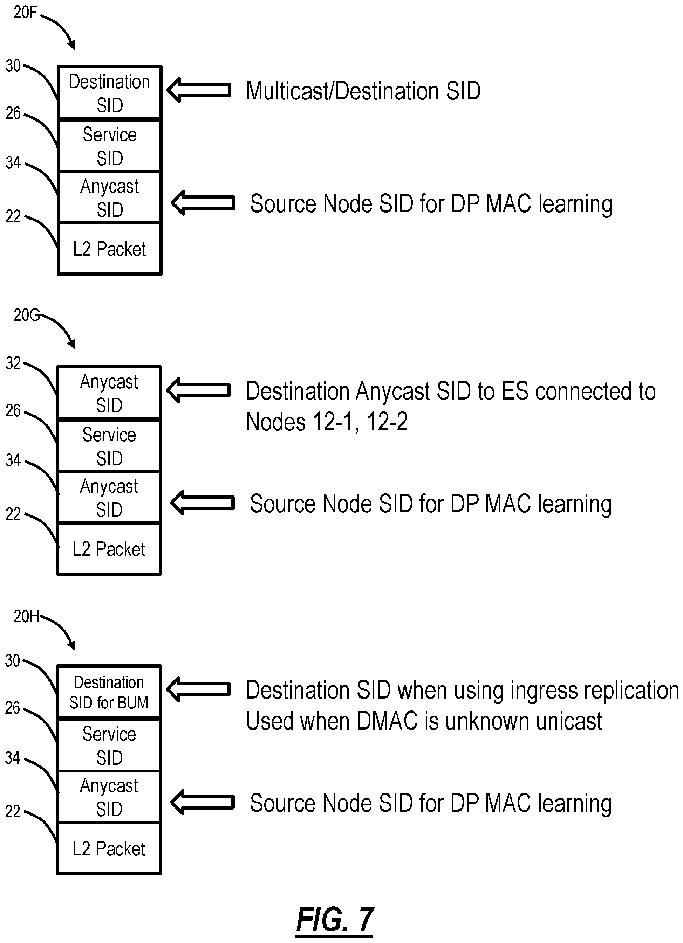

FIG. 7 is a block diagram of example packets 20F, 20G, 20H for illustrating transmissions in the network 10 of FIG. 6. The packet 20F is for BUM/known unicast (DMAC in L2 packet) from the CE2 through the node 12-5. The packet 20G is for known unicast (DMAC in L2 packet) from the CE2 from the node 12-5 to the nodes 12-1, 12-2. The packet 20H is for an unknown unicast DMAC in L2 packet from the CE2 through the node 12-5.

### SR-EVPN-VPLS service with data plane MAC learning - ARP suppression mechanism

Gleaning ARP packet requests and replies can be used to learn IP/MAC binding for ARP suppression. ARP replies are unicast; however, flooding ARP replies can allow all nodes to learn the MAC/IP bindings for the destinations as well.

### SR-EVPN-VPLS service with data plane MAC learning - Mass withdrawal

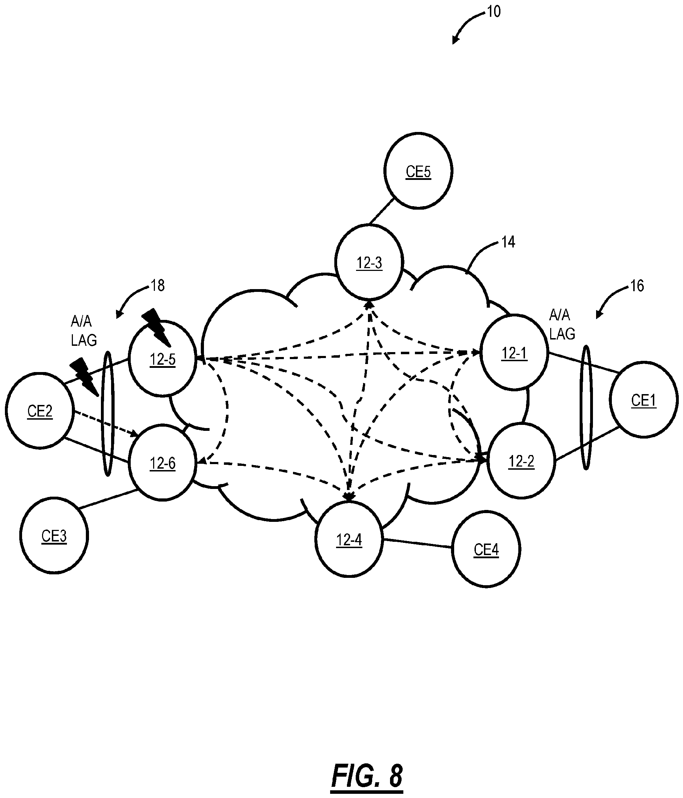

FIG. 8 is a network diagram of the network 10 illustrating mass withdrawal. Responsive to a node 12 failure, IGP/BGP will converge, and there is no need to flood any EVPN MASS withdrawal. Responsive to a link failure, the corresponding node 12 can withdraw in IGP/BGP the anycast SID associated with the site, not to receive any packets destined to the MH CE site. For example, in FIG. 8, the node 12-5 can detect a link failure with the CE2 and withdraw in IGP/BGP the anycast SID associated with erthernet segment connected to CE2 and the node 12-5.

### SR-EVPN-VPLS service with data plane MAC learning - Multi-pathing

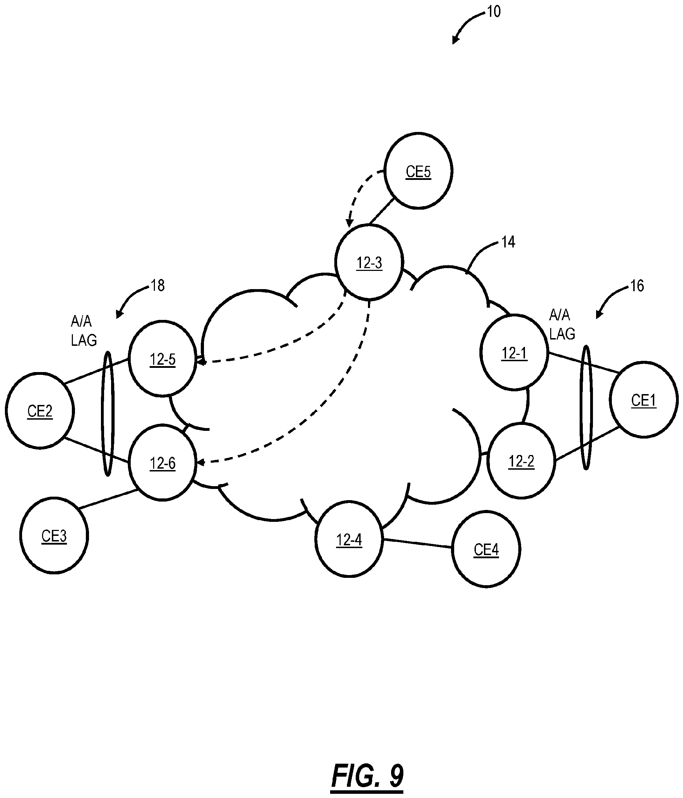

FIG. 9 is a network diagram of the network 10 illustrating multi-pathing. In this example, a packet from the CE5 through the node 12-3 destined to the MH CE2 connected to the nodes 12-5, 12-6, will utilize ECMP across the Segment Routing network 14 to the nodes 12-5, 12-6, given that it was learned via the anycast SID 32 owned by the nodes 12-5, 12-6. For an example link failure between the node 12-6 and the CE2, the node 12-6 can send the received L2 packet from the Segment Routing network 14 to the node 12-5 or any other of the nodes 12 connected to the MH CE2.

### SR-EVPN-VPLS service with data plane MAC learning - DF Election mechanisms

DF election mechanisms described in RFC 7432 and various drafts on the DF election are still required but instead used based on received anycast SID advertisement and discovering the other members associated with the MH segment. The DF election describes which node 12 forwards to the CE node in a multi-homing configuration, e.g., the nodes 12-5, 12-6 to the CE2. The present disclosure contemplates existing techniques for such an election, such as RFC 8584, "Framework for Ethernet VPN Designated Forwarder Election Extensibility," April 2019.

### SR-MPLS and SRv6 for SR-EVPN-VPLS service

As is shown in the various packets 20, the present disclosure generally utilizes a plurality of SIDs 24, 26, 30, 32, 34 for support of data plane MAC learning SR-EVPN-VPLS service. This can include at least three SIDs, namely the destination SID, the service SID, and the source SID. The destination SID 30 defines the destination (node 12) of the packet 20, the service SID 26 identifies the EVI, and the source SID 24, 34 identifies the source (node 12) of the packet 20. As such, any PE node 12 in an EVI can learn the CE MAC address association with PE nodes 12 based on the SID 24, 34.

The present disclosure contemplates use with either SR-MPLS or SRv6. In SR-MPLS, the destination SID, the service SID, and the source SID are MPLS labels. The destination SID can be a node SID or an anycast SID. The service SID can be a new SR endpoint type SID, as long as the nodes 12 can uniquely identify each EVI from the service SID. The source SID can be a node SID or an anycast SID.

For SRv6, there are two options to encode the SID, one as defined in tools.ietf.org/html/draft-ietf-spring-srv6-network-programming-10 and one as defined in tools.ietf.org/html/draft-filsfils-spring-net-pgm-extension-srv6-usid-04, the contents of each are incorporated by reference herein.

Option 1: 128bits SRv6 SID format is LOC:FUNCT:ARG - the destination SID, the service SID, and the source SID can be encoded in the FUNCT part. This option would require the Segment Routing Header (SRH) with a segment list. One option is to encode the source SID in the v6 source address SA, as well the destination SID can be the v6 Destination address DA, and the SRH, in that case, may only have the service SID. New SR endpoint behavior as per tools.ietf.org/html/draft-ietf-spring-srv6-network-programming-10 can be defined to perform the MAC learning. The SRH can include other transport SIDs to reach the destination of the service.

Option 2 128bits SRv6 SID format <uSID-Block><Active-uSID> <Next-uSID>...<Last-uSID><End-of-Carrier> - uSID is 16 bits. End of Carrier = 0. In this case, the destination SID and the service SID can be encoded in the SRv6 DA and the source SID in the v6 source address, i.e., an SRH may not be needed in that case. The SRH may exist and can include other transport uSIDs to reach the destination of the service.

### SR-EVPN-VPLS process

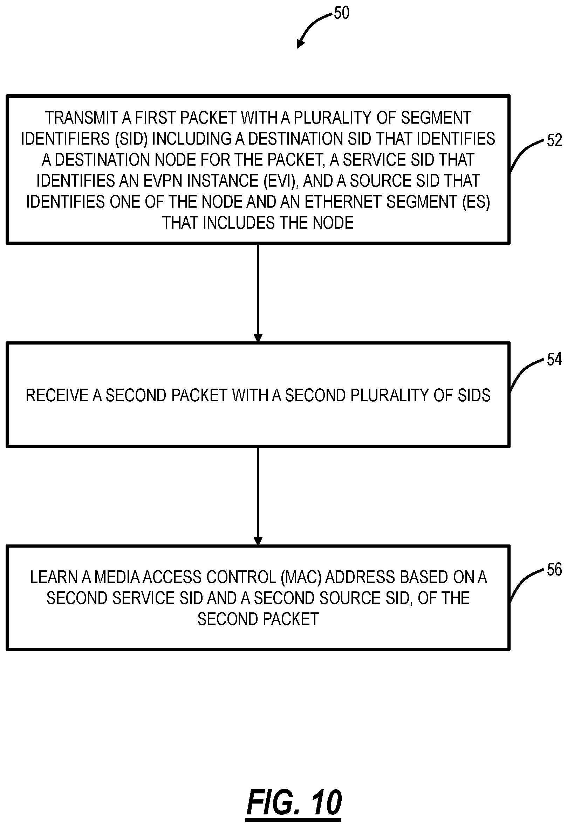

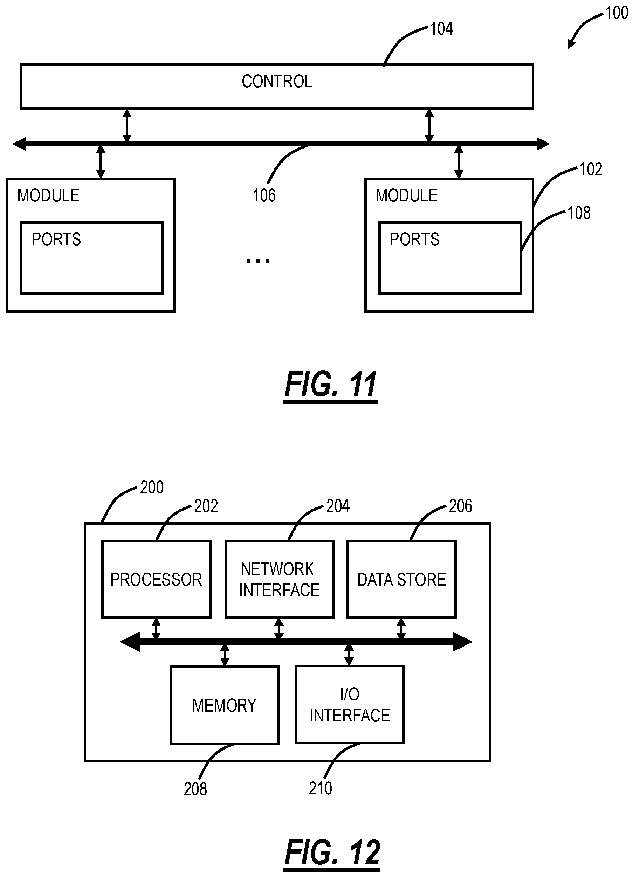

FIG. 10 is a flowchart of a process 50 implemented by a node 12 in a Segment Routing network 14. The node 12 can include a plurality of ports and a switching fabric between the plurality of ports, such as illustrated in FIG. 11. The process 50 is performed to implement data plane MAC learning in an SR-EVPN-VPLS service.

The process 50 includes transmitting a first packet with a plurality of Segment Identifiers (SID) including a destination SID that identifies a destination node for the packet, a service SID that identifies an EVPN Instance (EVI), and a source SID that identifies one of the node and an Ethernet Segment (ES) that includes the node (step 52), receiving a second packet with a second plurality of SIDs (step 54), and learning a Media Access Control (MAC) address based on a second service SID and a second source SID, of the second packet (step 56).

Again, the node 12 utilizes the second plurality of SIDs for data plane-based MAC learning in lieu of control plane learning. The service SID is configured on every node in the Segment Routing network that are a member of the EVI. The service SID is distributed via signaling in the Segment Routing network. The source SID is an anycast SID when the node is in a multi-homed configuration in the ES along with one or more additional nodes of the Segment Routing network. The node and the one or more additional nodes in the Segment Routing network utilize a designated forwarding election to determine which node forwards in the ES. The destination SID can be a multicast SID for Broadcast, Unknown, and Multicast (BUM) traffic. The source SID is located after the service SID, in the label stack, for the destination node to learn a source Media Access Control (MAC) address in the L2 packet associated with the node (Source SID).

### Example node

FIG. 11 is a block diagram of an example implementation of a node 100, such as for the node 12 in the network 10 and the Segment Routing network 14. Those of ordinary skill in the art will recognize FIG. 11 is a functional diagram in an oversimplified manner, and a practical embodiment may include additional components and suitably configured processing logic to support known or conventional operating features that are not described in detail herein.

In an embodiment, the node 100 is a packet switch, but those of ordinary skill in the art will recognize the systems and methods described herein can operate with other types of network elements and other implementations that support SR networking. In this embodiment, the node 100 includes a plurality of modules 102, 104 interconnected via an interface 106. The modules 102, 104 are also known as blades, line cards, line modules, circuit packs, pluggable modules, etc. and generally refer to components mounted on a chassis, shelf, etc. of a data switching device, i.e., the node 100. Each of the modules 102, 104 can include numerous electronic devices and/or optical devices mounted on a circuit board along with various interconnects, including interfaces to the chassis, shelf, etc.

Two example modules are illustrated with line modules 102 and a control module 104. The line modules 102 include ports 108, such as a plurality of Ethernet ports. For example, the line module 102 can include a plurality of physical ports disposed on an exterior of the module 102 for receiving ingress/egress connections. Additionally, the line modules 102 can include switching components to form a switching fabric via the interface 106 between all of the ports 108, allowing data traffic to be switched/forwarded between the ports 108 on the various line modules 102. The switching fabric is a combination of hardware, software, firmware, etc. that moves data coming into the node 100 out by the correct port 108 to the next node 100. "Switching fabric" includes switching units in a node; integrated circuits contained in the switching units; and programming that allows switching paths to be controlled. Note, the switching fabric can be distributed on the modules 102, 104, in a separate module (not shown), integrated on the line module 102, or a combination thereof.

The control module 104 can include a microprocessor, memory, software, and a network interface. Specifically, the microprocessor, the memory, and the software can collectively control, configure, provision, monitor, etc. the node 100. The network interface may be utilized to communicate with an element manager, a network management system, the SR controller 16, etc. Additionally, the control module 104 can include a database that tracks and maintains provisioning, configuration, operational data, and the like.

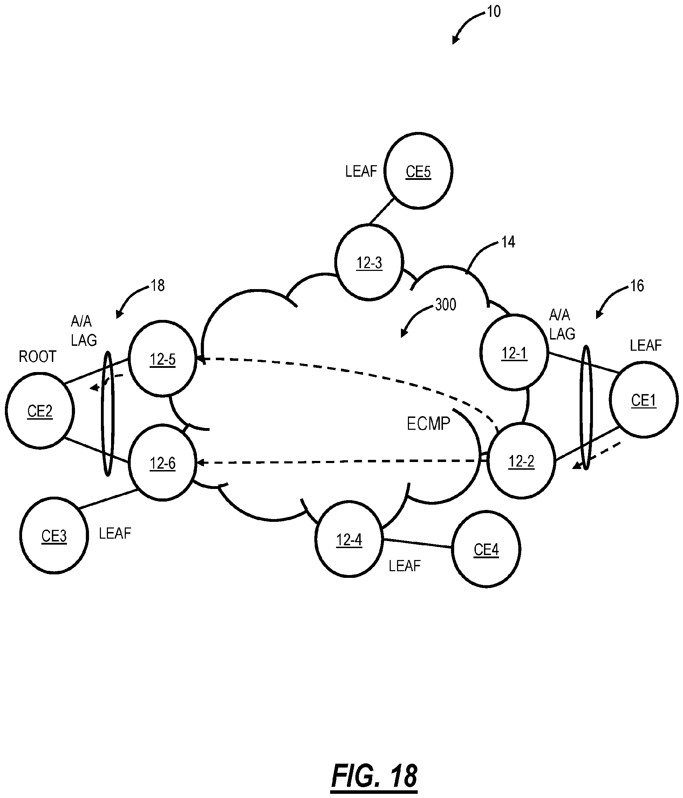

Again, those of ordinary skill in the art will recognize the node 100 can include other components which are omitted for illustration purposes, and that the systems and methods described herein are contemplated for use with a plurality of different network elements with the node 100 presented as an example type of network element. For example, in another embodiment, the node 100 may include corresponding functionality in a distributed fashion. In a further embodiment, the chassis and modules may be a single integrated unit, namely a rack-mounted shelf where the functionality of the modules 102, 104 is built-in, i.e., a "pizza-box" configuration. That is, FIG. 18 is meant to provide a functional view, and those of ordinary skill in the art will recognize actual hardware implementations may vary.

### Example controller

FIG. 12 is a block diagram of an example controller 200, which can form a controller for the node 12. The controller 200 can be part of the node 12, or a stand-alone device communicatively coupled to the node 200. Also, the controller 200 can be referred to in implementations as a control module, a shelf controller, a shelf processor, a system controller, etc. The controller 200 can include a processor 202 which is a hardware device for executing software instructions. The processor 202 can be any custom made or commercially available processor, a central processing unit (CPU), an auxiliary processor among several processors associated with the controller 200, a semiconductor-based microprocessor (in the form of a microchip or chipset), or generally any device for executing software instructions. When the controller 200 is in operation, the processor 202 is configured to execute software stored within the memory, to communicate data to and from the memory, and to generally control operations of the controller 200 pursuant to the software instructions. The controller 200 can also include a network interface 204, a data store 206, memory 208, an I/O interface 210, and the like, all of which are communicatively coupled to one another and to the processor 202.

The network interface 204 can be used to enable the controller 200 to communicate on a data communication network, such as to communicate to a management system, to the nodes 12, 100, and the like. The network interface 204 can include, for example, an Ethernet module. The network interface 204 can include address, control, and/or data connections to enable appropriate communications on the network. The data store 206 can be used to store data, such as control plane information, provisioning data, Operations, Administration, Maintenance, and Provisioning (OAM&P) data, etc. The data store 206 can include any of volatile memory elements (e.g., random access memory (RAM, such as DRAM, SRAM, SDRAM, and the like)), nonvolatile memory elements (e.g., ROM, hard drive, flash drive, CDROM, and the like), and combinations thereof. Moreover, the data store 206 can incorporate electronic, magnetic, optical, and/or other types of storage media. The memory 208 can include any of volatile memory elements (e.g., random access memory (RAM, such as DRAM, SRAM, SDRAM, etc.)), nonvolatile memory elements (e.g., ROM, hard drive, flash drive, CDROM, etc.), and combinations thereof. Moreover, the memory 208 may incorporate electronic, magnetic, optical, and/or other types of storage media. Note that the memory 208 can have a distributed architecture, where various components are situated remotely from one another, but may be accessed by the processor 202. The I/O interface 210 includes components for the controller 200 to communicate with other devices.

### VPLS with Segment Routing

In the present disclosure, a VPLS instance is represented by a SID regardless of the number of service termination points. A SID identifying a VPLS instance (which can be called, e.g., a VPLS Service SID) can be an MPLS label for SR-MPLS or a uSID (micro SID) for SRv6 representing network function associated with a VPLS instance.

In the data packets, the node SID of the source is inserted below the service SID so that a destination node can uniquely identify the source of the packets in an SR domain (i.e., existing point-to-point PW semantics are preserved). So, referring to the example in the background where 10000 VPLS instances over 100 nodes requiring 1 million PWs, each node needs to maintain approximately 10000 PWs as opposed to 1 million, which leads to significant reduction in control plane overhead.

In the present form, VPLS cannot provide redundancy in an Active-Active mode. However, thanks to SR anycast SID capability, the proposed approach inherently provides such redundancy.

A VPLS instance is associated with a Service SID that is unique within the VPLS domain. A node can advertise service SID(s) of the VPLS instance(s) that it is associated with via BGP for auto-discovery purpose. In the case of SR-MPLS, a service SID can be carried as a range of absolute values or an index into an Segment Routing Global Block (SRGB), and in the case of SRv6, a service SID can be carried as uSID in BGP updates. The objective is to pack information about all VPLS service instances supported (at the time of sending update) on a transmitting node in single BGP update so as to reduce the amount of overall BGP update messages in a network.

Each node is also associated with a unique SID that is used to identify incoming BUM traffic. This can be called a BUM SID. If node A wants to send BUM traffic to node B, it needs to use BUM SID assigned to node B as a service SID. In order to send BUM traffic within a VPLS domain, P2MP SR policies can be used. Such policies may or may not be shared by VPLS instances.

The approach described herein can also be applicable to the EVPN control plane without compromising its benefits such as multi-active redundancy on access, multipathing in the core, auto-provisioning, and auto-discovery, etc. With this approach, the need for advertisement of EVPN route types 1 through 4 as well Split-Horizon (HP) label is eliminated.

### VPLS with Segment Routing - data plane behavior

The approach described herein can include a unicast data packet in the following format:

| |
|---|
| SID(s) to reach the destination node |
| Service SID |
| SID identifying source node |
| Layer 2 payload |

The SID(s) to reach the destination node depends on the intent of the underlay transport. For an IGP shortest path, this SID can be the node SID of the destination node, and the destination node can belong to an anycast group. For an IGP path with intent, this SID can be a Flexible Algorithm (Flex-Algo) SID if the destination can be reached using the Flex-Algo SID for a specific intent (e.g., low latency path). The destination can belong to an anycast group. For an SR policy (to support fine intent), this SID can include a SID-list for the SR policy that can be used to reach the destination.

The service SID in a SID that uniquely identifies a VPLS instance in an SR domain. The SID identifying the source node is a SID that uniquely identifies the source node. This can be a node SID which may be part of an anycast group.

In order to identify incoming BUM traffic on any node for a given VPLS instance, a single SID is allocated for each VPLS instance. A BUM packet is formed as shown as follows:

| |
|---|
| SID(s) to reach the destination node |
| Per node BUM SID |
| SID identifying source node |
| Layer 2 payload |

In order to send BUM traffic, a P2MP SR policy may be established from a given node to rest of the nodes associated with a VPLS instance. If a dedicated P2MP SR policy is used per VPLS service instance, a single SID may be used as both replication SID for the P2MP SR policy as well as to identify VPLS service. With this approach, the number of SIDs imposed on data packet will be only two.

### VPLS with Segment Routing - service discovery

A node can discover VPLS services instances as well as the associated service SIDs on other nodes via configuration or auto-discovery. With the later, the service SIDs can be advertised using BGP. As mentioned earlier, the service SIDs can be MPLS label (absolute value or index into an SRGB) or SRv6 uSID. Similar to the VPLS service SID, a node can discover BUM SID associated with another node via configuration or auto-discovery.

### VPLS with Segment Routing - Active-Active service Redundancy

An anycast SID per Ethernet Segment (ES) will be configured on all nodes attached to an MH site. The SIDs will be advertised in BGP by nodes connected to the MH site. Each node attached to the MH site will advertise the same anycast SID in order to allow other nodes to discover the membership and perform DF election. Aliasing/Multi-pathing achieved using the same mechanisms used for anycast SID.

### VPLS with Segment Routing - Data plane MAC learning

With the proposed approach, MAC address can be learned in data plane as explained herein and via examples below. The source MAC address on the received Layer 2 packet will be learned through the data plane against the source node SID, encapsulated under the service SID.

For a single home CE, such as the CE5 in FIG. 1, the node 12-3 will learn the CE3 MAC and flood this MAC to all nodes configured with the same service SID. The nodes 12-1, 12-2, 12-4, 12-5, 12-6, will learn the MAC as reachable via the source node SID owned by the node 12-3. The following is a flooded layer 2 packet with the SID list at the node 12-3.

| |
|---|
| Tree SID/Broadcast node SID |
| VPLS Service SID |
| Node 12-3 SID |
| Layer 2 payload |

For a MH home CE, such as the CE2 in FIG. 1, the node 12-5 will learn the MH-CE MAC and flood the MAC to all nodes in data plane as per SID stack shown in the diagram below, including node 6, each Node will learn the MAC as reachable via the anycast SID owned by the nodes 12-5, 12-6. The node 12-2 will apply Split Horizon and will not send the packet back to the MH CE, but will program the MAC as reachable via the MH CE, as well will flood to the local CE3 site.

The following diagram shows SID label stack for a Broadcast and Multicast MAC frame sent by Multi-Home PE. Note the presence of the source (anycast) SID after the service SID. This combination order is necessary for the receiver to learn source MAC address (from L2 packet) associated with sending PE (i.e., the source SID).

| |
|---|
| Tree SID/Broadcast node SID |
| VPLS Service SID |
| Source Node/Anycast SID |
| Layer 2 payload |

### VPLS with Segment Routing - ARP suppression

Gleaning ARP packet requests and replies will be used to learn IP/MAC binding for ARP suppression. ARP replies are unicast, however flooding ARP replies can allow all nodes to learn the MAC/IP bindings for the destinations too.

### VPLS with Segment Routing - Multi-pathing

Packets destined to a MH CE is distributed to the PE nodes attached to the CE for load balancing purposes. This is achieved implicitly due to the use of anycast SIDs for both ES as well as PE attached to the ES. In the example of FIG. 1, traffic destined to CE2 is distributed via the nodes 12-5, 12-6.

### VPLS with Segment Routing - Mass service withdrawal

On a node 12 failure, IGP/BGP will converge and there is no need to flood any MAC withdrawal. Technique like BFD shall be deployed for fast detection of failure. On a PE-CE link failure, the PE node 12 withdraws the route to the corresponding ES in BGP in order to stop receiving traffic to that ES.

With the MH case with and anycast SID, upon detecting a failure on PE-CE link, a PE node may forward incoming traffic to the impacted ES(s) to other PE nodes part of the anycast group until it withdraws routes to the impacted ES(s) for faster convergence. For example, in FIG. 1, assuming the nodes 12-5, 12-6 are part of an anycast group, upon link failure between the node 12-5 and the CE2, the node 12-5 can forward the received packets from the core to the node 12-6 until it withdraws the anycast SID associated with the MH site.

### VPLS with Segment Routing - Benefits

The proposed approach eliminates the need for establishing and maintaining PWs as with legacy VPLS technology. This yields significant reduction in control plane overhead. Also, due to MAC learning in the data plane (conversational MAC learning), the proposed approach provides the benefits as such fast convergence, fast MAC movement, etc. Finally, using the anycast SID, the proposed approach provides Active-Active multihoming as well as multipathing and ARP suppression.

### E-tree

Descriptions of the E-tree are in RFC 7387 "A Framework for Ethernet Tree (E-Tree) Service over a Multiprotocol Label Switching (MPLS) Network," October 2014, and RFC 8317 "Ethernet-Tree (E-Tree) Support in Ethernet VPN (EVPN) and Provider Backbone Bridging EVPN (PBB-EVPN)," the contents of each are incorporated herein by reference. E-tree as described, e.g., in MEF Technical Specific MEF 6.1 "Ethernet Services Definitions - Phase 2," April 2008.

In its simplest form, an E-tree can provide a single Root for multiple Leaf UNIs. Each Leaf UNI can exchange data with only the Root UNI. A service frame sent from one Leaf UNI with a destination address for another Leaf UNI is not delivered. This service could be useful for Internet Access or Video over IP applications, such as multicast/broadcast packet video. In more sophisticated forms, an E-Tree Service type may support two or more Root UNIs. In this scenario, each Leaf UNI can exchange data only with the Root UNIs. As well, the Roots can communicate with each other. In such a service, redundant access to 'the Root' can also be provided, effectively allowing for enhanced service reliability and flexibility.

### NG-VPLS E-tree using Segment Routing

The present disclosure provides an approach for supporting an E-tree with NG-VPLS using Segment Routing. Again, NG-VPLS using Segment Routing solves the scale problem so 10,000 services will be presented by only 10,000 Service SIDs regardless of how many endpoints participate in the service - service SID - only 10,000 + node SIDs - 100 - split the label. This approach maintains the PW P2P semantics between 2 endpoints by presenting the endpoint by another SID under the service SID in the SID list, and solves the Active/Active Redundancy and multipathing using Segment Routing anycast SIDs. This scheme greatly simplifies the BGP overhead of the existing EVPN/VPLS control plane. This scheme does not take away most liked benefits of EVPN such as support of multi-active redundancy on access, multipathing in the core, auto-provisioning, and auto-discovery. Since the need for VPLS PW is eliminated, the control plane overhead (in particular in large deployment) of setting up and maintaining VPLS PWs is eliminated.

### NG-VPLS E-tree using Segment Routing - service discovery using SR signaling

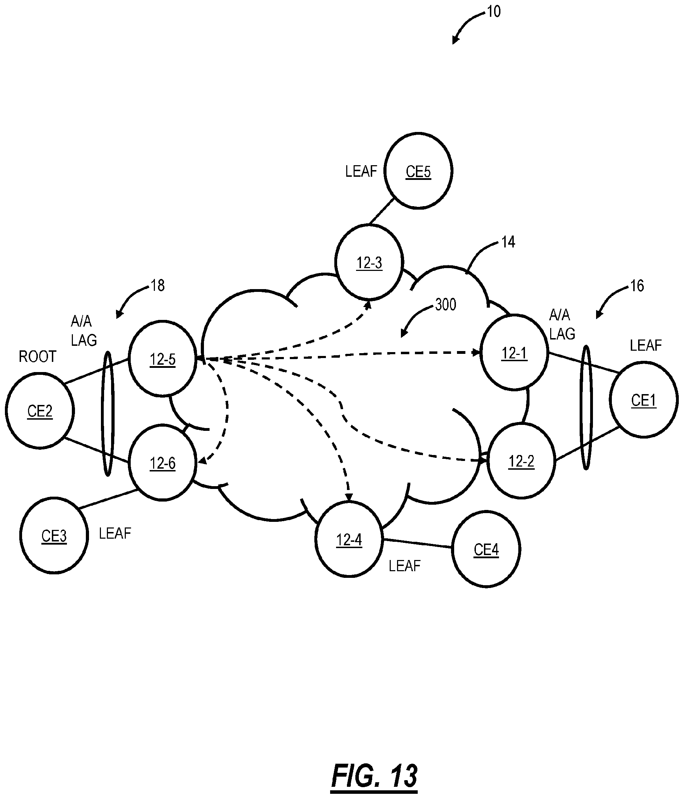

FIG. 13 is a network diagram of the network 10 with an E-tree service 300 for illustrating service discovery using Segment Routing signaling. In this example, the CE2 is the Root nodes, and CE1, CE3, CE4, CE5 are Leaf nodes; of course, other embodiments are also contemplated. In an embodiment, the present disclosure enables NG-VPLS E-Tree services without having to use the VPLS or EVPN Route Types 1, 2, 3 and 4, and with no need for SH label, or per MAC leaf indication.

For service discovery, the following format can be used:

| |
|---|
| Multicast SID |
| VPLS Service SID |
| Source SID |
| Layer 2 payload |

The multicast SID is used for ingress replication and can equal the broadcast node SID. The Service SID can be a VPLS Service SID signaled by IGP/BGP for service auto discovery. A VPLS service SID can be represented by an absolute value or index into a SID space reserved for VPLS service. The VPLS Service SID can include one route containing a start Service SID and a bitmap of Service SIDs along with a Broadcast Node SID for BUM traffic and a Leaf Node SID for traffic from Leaf nodes. The bitmap can include one bit for each service, with the nodes 12 knowing which service is which bit. For example, the bitmap can start with a first Service SID and each subsequent bit can represent a subsequent Service SID. In this manner, a bitmap can advertise multiple Service SIDs with just one bit for each. Specifically. each node will advertise in control plane:
(1) a Broadcast Node SID to be used by other nodes when replicating BUM traffic;
(2) Leaf Node SID to be used by the node for traffic from local leaf nodes;
(3) Regular Node SID to be used by the node when traffic is from local Single Home root sites; and
(4) Anycast SID per Multi-Home site with an indication if the site is a leaf.

Note that if the node SID is advertised by SR control plane, Leaf Node SIDs are not carried in service advertisement. Nodes will flood to IGP/BGP control plane the service SIDs they are configured with. In FIG. 13, the nodes 12-1 - 12-6 will flood to the IGP/BGP control plane the Service SIDs they are configured with. The flooding information can be used to discover what node is configured with what service, as well to help build p2mp flooding trees for L2 BUM traffic. It is possible to build inclusive p2mp flooding trees per service, or aggregate inclusive for a group of service SIDs.

Ingress replication per Service could be used replicating to each node 12 using its broadcast SID. On any node 12, if a packet is received in the data plane with a source SID that was advertised by a source node 12 as associated with a leaf, then the receiving node 12 MUST filter this packet and not forward this packet to any local leaf node.

By using weight for nodes in anycast group, traffic can be directed to only one egress node within egress anycast group, and upon failure, the traffic will be forwarded to some other egress node in anycast group. Such approach reduces redundant traffic without compromising redundancy provided by anycast group.

### NG-VPLS E-tree using Segment Routing - A/A redundancy using anycast SID

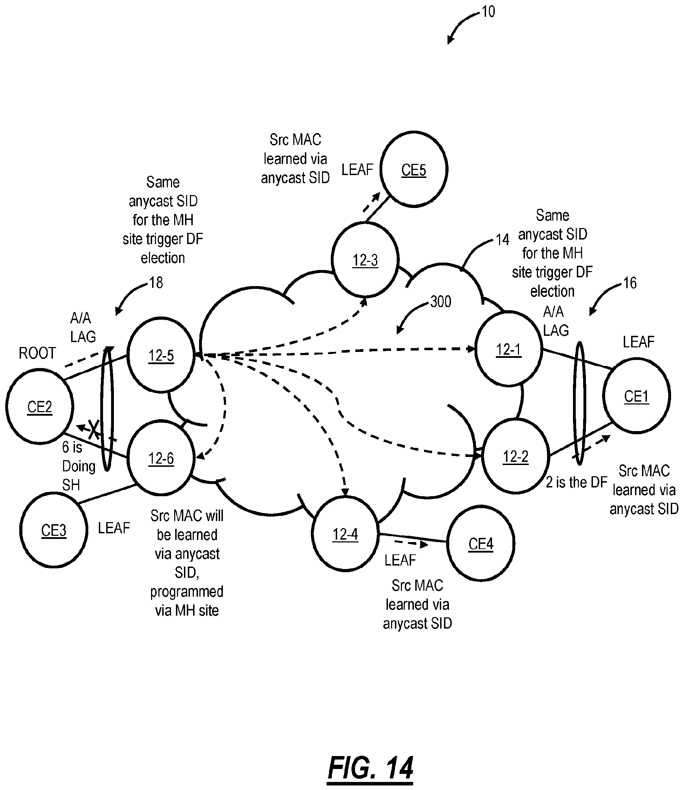

FIG. 14 is a network diagram of the network 10 with the E-tree service 300 for illustrating A/A redundancy using an anycast SID. For A/A redundancy, the following format can be used:

| |
|---|
| Broadcast Node SID |
| VPLS Service SID |
| Anycast SID1 |
| Layer 2 payload |

Note the presence of the source (anycast) SID after the service SID. This combination order is necessary for the receiver to learn the source MAC address (from L2 packet) associated with sending PE (node 12) (i.e., source SID), and knowing if the site from where the MAC is learned is a leaf or a root site.

The anycast SID per Ether Segment configured on all nodes attached to a MH site with leaf indication if the site is a leaf site, flooded by IGP/BGP for reachability through the set of nodes connected to the MH site. Each node attached to the MH site will advertise the same anycast SID, to allow other nodes to discover the membership, and perform the DF election. Aliasing/Multi-pathing is achieved using the same mechanisms used for anycast SID.

In FIG. 14, the node 12-5 will learn the MH-CE MAC of the CE2 and flood the MAC to all nodes 12 in data plane as per SID stack shown in the diagram above, including the node 12-6, each node will learn the MAC as reachable via the anycast SID owned by the nodes 12-5, 12-6. Given that the flood came from a root site (i.e., from the node 12-5 attached via the Root-MH-CE, the nodes 12-1 - 12-4 will flood to their local sites. The node 12-6 will apply Split Horizon and will not send the packet back to the MH CE, but will program the MAC as reachable via the MH CE, as well will flood to the local leaf site, i.e., the CE3.

### NG-VPLS E-tree using Segment Routing - data plane MAC learning mechanism

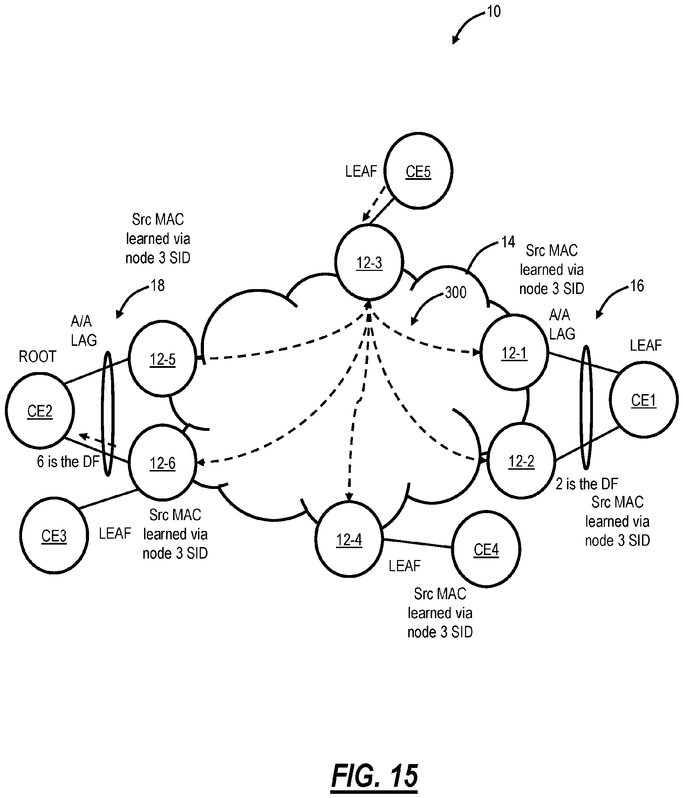

FIG. 15 is a network diagram of the network 10 with the E-tree service 300 for illustrating a data plane MAC learning mechanism. The MAC is learned through the data plane against the source leaf node SID, encapsulated under the service SID in the L2 forwarded packets. The format can include:

| |
|---|
| Multicast/Broadcast Node/Destination SID |
| VPLS Service SID |
| Leaf Node SID |
| Layer 2 payload |

In the above diagram, the topmost SID is either a multicast SID if the Destination MAC (DMAC) is BUM and the SR multicast tree has been built, or it is a Broadcast node SID for BUM when the DMAC is BUM and ingress replication is used, or it is the Destination node SID if the DMAC is known unicast with learned association of SID and MAC.

The Leaf Node SID is the source SID for data plane MAC learning. Note the source Node SID has been signaled by the node 12-3 in this example of FIG. 15 as associated with a leaf node, CE5

In the example of FIG. 15, the node 12-3 will learn the CE5 MAC and flood this MAC to all nodes configured with the same service SID. The node 12-1, 12-2, 12-4, will learn the MAC as reachable via the source leaf node SID owned by the node 12-3 and will not forward to their respective leaf nodes, CE1, CE4. The nodes 12-5, 12-6, will learn the MAC as reachable via the source node SID owned by the node 12-3 and the node 12-6 as the DF will forward only to the root node, CE2.

### NG-VPLS E-tree using Segment Routing - ARP suppression mechanism

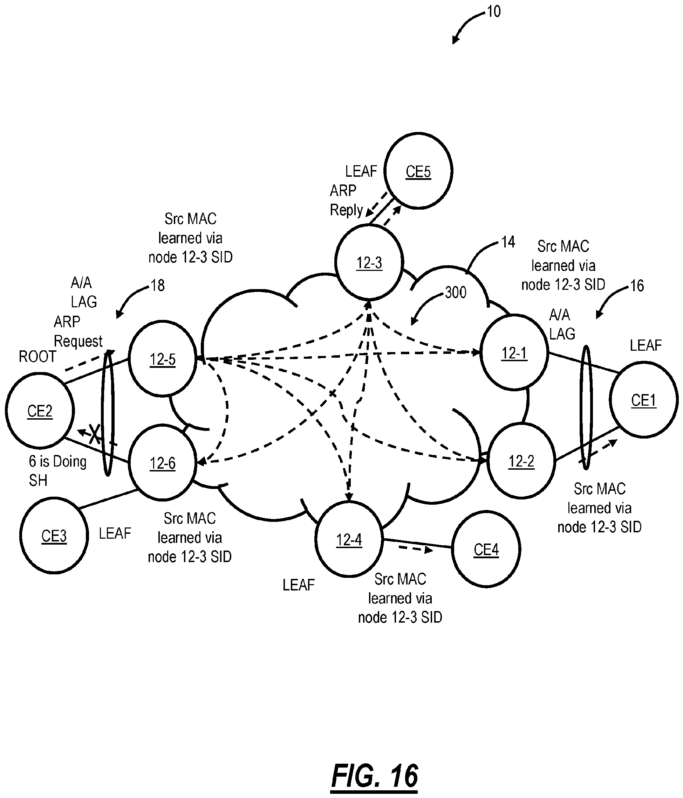

FIG. 16 is a network diagram of the network 10 with the E-tree service 300 for illustrating an ARP suppression mechanism. The ARP suppression mechanism includes gleaning ARP packet requests and replies to learn IP/MAC binding for ARP suppression. ARP replies are unicast, however flooding ARP replies can allow all nodes to learn the MAC/IP bindings for the destinations too.

In the example of FIG. 16, an ARP request is sent from the CE2 via the node 12-5 and the following diagram illustrates an encapsulated ARP request packet sent by the node 12-5 to the nodes 12-1, 12-2, 12-3, 12-4, 12-6.

| |
|---|
| Broadcast Node SID |
| VPLS Service SID |
| Anycast SID1 |
| Layer 2 payload |

The following diagram illustrates an encapsulated ARP reply packet sent by the node 12-3 when sent to the nodes 12-1, 12-2, 12-5, 12-4, 12-6. Note, the Source Node SID (i.e., the Leaf Node SID for the node 12-3) has been signaled as associated with a leaf node (i.e., the CE5).

| |
|---|
| Broadcast Node SID |
| VPLS Service SID |
| Leaf Node SID |
| Layer 2 payload |

### NG-VPLS E-tree using Segment Routing - service mass withdrawal

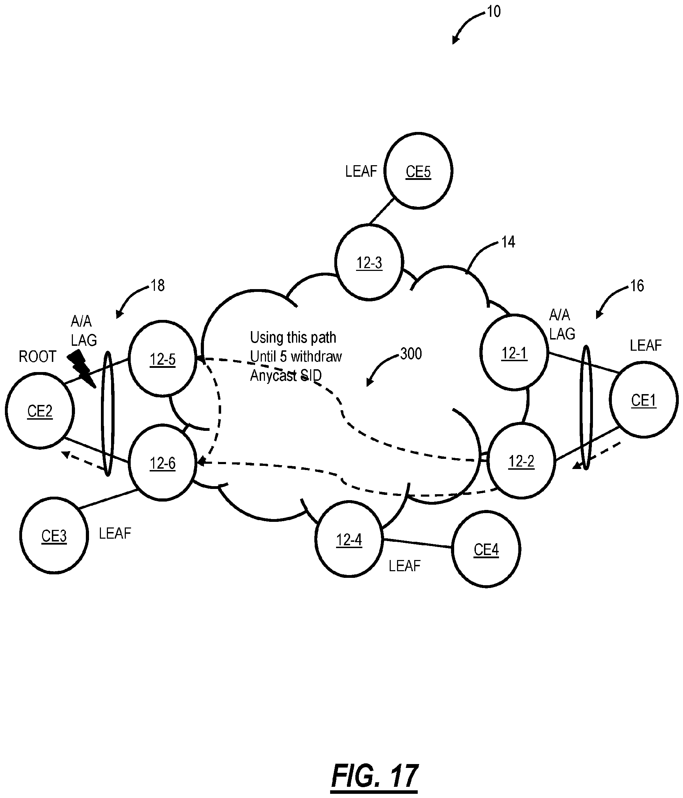

FIG. 17 is a network diagram of the network 10 with the E-tree service 300 for illustrating service mass withdrawal. There can be two types of failures - entire node failures (i.e., one of the nodes 12) and a link failure (i.e., a link connecting a CE to one of the nodes 12). On node failure, IGP/BGP will converge and there is no need to flood any MAC withdrawal. On link failure, the node 12 can withdraw in IGP/BGP the anycast SID associated with the site, not to receive any packets destined to the MH site. In the example of FIG. 17, there is a failure of the link between the CE2 and the node 12-5. On this example link failure, the node 12-5 can send the received L2 packet from the core to other nodes 12-6 connected to the MH CE (the node 12-5 using the node 12-5 SID), for fast convergence until it withdraws the anycast SID associated with the MH site. The following illustrates an example packet sent from the node 12-2. Note, that the Source Node SID is an anycast SID has been signaled as associated with a leaf indication by the nodes 12-1, 12-2.

| |
|---|
| Anycast SID2 |
| VPLS Service SID |
| Anycast Leaf Node SID1 |
| Layer 2 payload |

### NG-VPLS E-tree using Segment Routing - ECMP multi-pathing

FIG. 18 is a network diagram of the network 10 with the E-tree service 300 for illustrating ECMP multi-pathing. The example of FIG. 18 illustrates a packet from the CE1 destinated for the CE2. A packet destined to the MH CE2 connected to the nodes 12-5, 12-6 will be ECMP across the core to the nodes 12-5, 12-6, given that it was learnt via anycast SID owned by the nodes 12-5, 12-6.

### NG-VPLS E-tree using Segment Routing - Benefits

The benefits of implementing an NG-VPLS E-tree using Segment Routing as described herein include maintaining data plane MAC learning benefits, including fast convergence, fast MAC move, and scale through conversational learning. The present disclosure brings the benefit of A/A multihoming, multipathing, and ARP suppression for a leaf MH site. Further, this leverages the benefits of a Segment Routing anycast SID, for redundancy and fast convergence and to discover nodes sharing the same anycast SID to perform DF election. The approach signals a per Node leaf SID to be used as a source node SID for traffic originating from the leaf node, and anycast SID with a leaf indication for MH leaf site.

### NG-VPLS E-tree using Segment Routing process

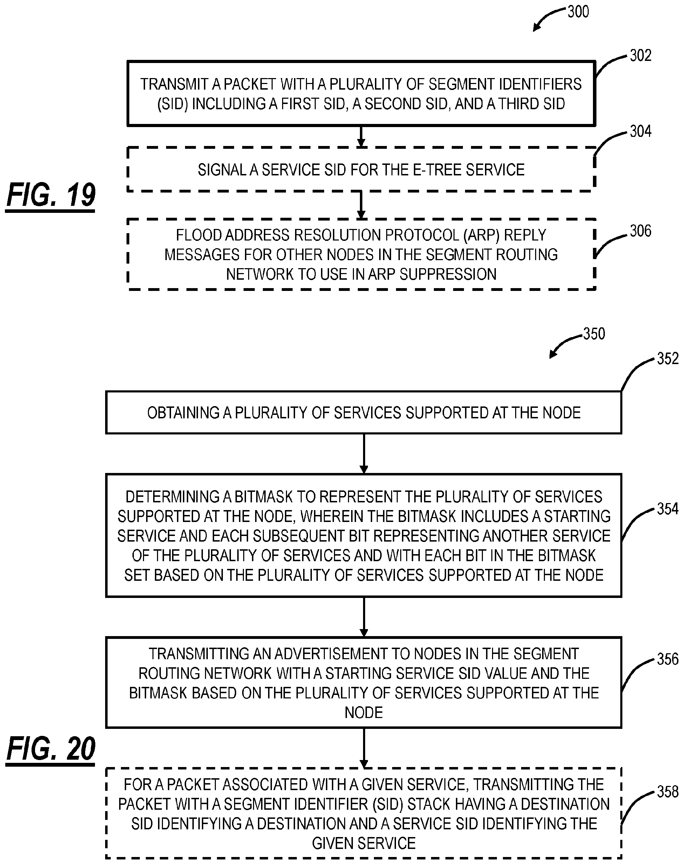

FIG. 19 is a flowchart of a process 300 implemented by a node in a Segment Routing network for supporting an E-tree service. The process 300 includes for an Ethernet Tree (E-tree) service and via a port of the node, transmitting a packet with a plurality of Segment Identifiers (SID) including a first SID, a second SID, and a third SID (step 302). The first SID identifies one of multicast, ingress replication for broadcast, and a destination node including any of a node SID and an anycast SID, the second SID identifies a service including the E-tree service, and the third SID identifies a source of the packet. A second port of the node is connected to a customer edge, and the third SID is based on whether the customer edge is a leaf node or a root node in the E-tree service.

A second port can be connected to a leaf node in the E-tree, and the third SID can include a leaf node SID. Other nodes in the Segment Routing network connected to leaf nodes in the E-tree learn the leaf node via the leaf node SID and prevent forwarding thereto. One or more nodes in the Segment Routing network connected to root nodes in the E-tree learn the leaf node via the leaf node SID for forwarding thereto.

The process 300 can further include signaling a service SID for the E-tree service (step 304). A second port can be connected to a customer edge that is multi-homed to the node and a second node, and wherein the third SID is an anycast SID. The process 300 can further include withdrawing the anycast SID responsive to a link failure. The process 300 can further include flooding Address Resolution Protocol (ARP) reply messages for other nodes in the Segment Routing network to use in ARP suppression (step 306).

### SR-Optimized VPWS+FXC Service discovery

Referring back to FIG. 1, a classical Pseudowire (PW) is a P2P service between two endpoints, e.g., CE2 to CE5, CE2 to CE1, CE4 to CE5, etc. Such a PW follows Layer 2 (L2) semantics and cannot support Active/Active redundancy or multipathing. The present disclosure includes NG-VPWS using Segment Routing to maintain the existing P2P PW semantics between two endpoints and provide active/Active Redundancy and multipathing using Segment Routing anycast SIDs. Further, the present disclosure greatly reduces the BGP overhead of the existing EVPN/VPWS control plane, and this approach does not take away the desired benefits of EVPN-VPWS, such as support of multi-active redundancy on access, multipathing in the core, auto-provisioning, and auto-discovery.

The present disclosure utilizes Segment Routing (SR) techniques to enable NG-VPWS services without maintaining a PW established via LDP/BGP or having to exchange EVPN route types 1 for per ES and per EVI. The following table illustrates contents for a P2P VPWS and/or FXC service advertisement. Note, the bitmask is a control plane attribute used to identify one or more of VPWS and/or FXC instances supported by a node sending the service advertisement, e.g., as a BGP update, an IGP update, and the like.

| |
|---|
| Destination SID - could be a Destination Node SID or an Anycast SID |
| Starting Service SID + bitmask |

The following table illustrates a SID stack for a P2P VPWS service or a FXC service (with the bottom being the Layer 2 (L2) packet for the P2P VPWS or the FXC service).

| |
|---|
| Destination SID - could be a Destination Node SID or an Anycast SID. This can also be a stack of SIDs (e.g., for traffic-engineering purposes) |
| Service SID |
| L2 Packet |

Note, the Destination SID can be a Destination Node SID or an Anycast SID. It is also possible that the Destination SID is a stack of SIDs such as where a sender of the packet desires a specific path, such as for traffic-engineering purposes.

The Destination SID denotes the destination of the L2 packet, and it can be a Node SID or an Anycast SID. Here, each node 12 can advertise, via IGP/BGP, a (1) regular Node SID to be used by the node 12 when a VPWS service is attached to local Single-Home sites (e.g., the nodes 12-3, 12-4) and an (2) Anycast SID per Multi-Home site when the VPWS service is attached to the Multi-Home (MH) site (e.g., the nodes 12-1, 12-2 and the nodes 12-5, 12-6).

The Service SID can be referred to as a P2P SID, a VPWS Service SID, etc., and its function is to identify the VPWS service. Note, in a practical implementation, there can be tens of thousands of normalized VIDs or more between two service endpoints. In the conventional approach, tens of thousands of BGP EVPN EAD advertisements are required to signal the status of an ES. In the present disclosure, significantly fewer route updates are required.

A Service SID is signaled by IGP/BGP for service auto discovery, and the nodes 12 discover the VPWS services hosted on other nodes via IGP/BGP. For efficiency, the present disclosure contemplates the use of a bitmap for signaling. As is known in the art, a bitmap is a representation in which each bit in a sequence of bits corresponds to information, namely, a first-bit location corresponds to a specific start Service SID and each bit location that follows represents the following Service SIDs in sequence. Each bit in the bitmap is 1 to denote the inclusion of that Service SID or 0 to denote exclusion. This enables a single advertisement to include multiple Service SIDs, versus a single advertisement for each.

In an embodiment, an advertisement can include a start Service SID (e.g., 50) and a bitmap of Service SIDs that follows (e.g., bits after the Service SID 50 representing Service SIDs 51, 52, etc.). This can include thousands of Service SIDs in one advertisement. The Service SID can be from an SRGB range dedicated only for VPWS service.

In another embodiment, an advertisement can include one Service SID and a start of a normalized VID with the bitmap following of normalized VIDs. For an FXC service, VLAN aware, the normalized VLAN IDs (VIDs) can be presented by a bitmask of VLANs configured in association with the VPWS service SID. For example, there could be tens of thousands of normalized VIDs between two service endpoints. With the existing mechanism, tens of thousands of BGP EAD advertisements to signal the status of ES. With the proposed approach, one or a few route updates are sufficient.

In the example network 10, each of the nodes 12-1 - 12-6 will advertise the service SIDs for the services they are configured with via IGP/BGP, including using the bitmask to reduce the number of requirement advertisements. A node 12 receiving the advertisement can learn the services supported by the sender of the advertisement (auto-discovery). That is, the nodes 12 hosting VPWS services flood the service SIDs they are configured with in association with either the regular node SID for VPWS services associated with single home sites, or in association with an anycast SID per MH Site for VPWS services associated with this MH site via IGP/BGP. VPWS services attached to an MH site (nodes 12-1, 12-2 or nodes 12-5, 12-6) are advertised in one route containing the start SID and the bitmap of service SIDs configured on the MH site and will be associated with the MH site anycast SID. This mechanism obviates the need for per PW status signaling for EVPN VPWS, and BGP/LDP signaled VPWS. With this mechanism, withdrawing underlying anycast SID is sufficient.

### SR-Optimized VPWS+FXC service A/A or A/S

Active/Active redundancy cannot be achieved by a traditional BGP/LDP signaled VPWS, and is possible only via EVPN VPWS. The present disclosure provides Active-Active redundancy without having to maintain BGP/LDP signaled backup PWs. This is achieved simply via anycast routes. An Anycast SID per Ethernet Segment is configured on all nodes attached to an MH site and is advertised via IGP/BGP for other nodes to learn the reachability of the MAC address. Each node attached to the MH site will advertise the same anycast SID to allow other nodes to discover the membership.

In FIG. 18, packets destined to the MH CE2 connected to the nodes 12-5, 12-6 are load-balanced (ECMP/UCMP) between those nodes across the network given that the MAC addresses of the packets are learned via an anycast SID belonging to the nodes 12-5, 12-6.

Each node 12 attached to the MH site advertises the same anycast SID to allow other nodes 12 to discover the membership (auto-discovery). Also, VPWS services SIDs associated with an MH site are advertised as one route with start SID and a bitmask of SIDs and the associated anycast SID for this MH site. For FXC, a route containing the start normalized VID and the bitmask of VIDs in association with the VPWS service SID is advertised. Aliasing/Multipathing/Fast convergence achieved using the same mechanisms used for anycast SID.

For A/S, the backup node advertises the anycast SID with a cost of infinity (or arbitrarily large value) so that other nodes will direct traffic to the backup node only if the primary node goes down.

### Benefits

The approach described herein greatly reduces the BGP Control Plane overhead of existing EVPN VPWS. For example, control plane messages will be at least two orders of magnitude less than current EVPN, and this removes the overhead of RDs and RTs associated with each EVPN route presenting a service. This approach enables the benefit of A/A multihoming and multipathing for the MH site. Again, the present disclosure leverages the benefits of Segment Routing anycast SID for redundancy and fast convergence to: discover nodes sharing the same anycast SID, perform DF election, and eliminate the need at all for implementing any sort of convergence and redundancy at the overlay (EVPN/BGP or LDP) layer. Also, the approach supports auto-discovery and single-sided service provisioning.

### Interworking

Interworking between old and new technologies is via a gateway (GW) that understands both old and new technologies. For the gateway, the interworking working function can reside on any node that can act as a GW converting control plane messages from/to old/new technologies and communicating with nodes supporting only either old or new technologies. A node 12 can support the old technologies and act as the GW to distribute the routes coming from L2VPN SAFI or EVPN to peers understanding the new technologies and vice-versa (it is bidirectional, from/to old/new), this is what EVPN did to interwork with LPVPN old SAFI stuff.

### Segment Routing VPWS process

FIG. 20 is a flowchart of a Segment Routing VPWS process 350. The process 350 can be implemented as a method having steps, via the node 12 configured to implement the steps, and as instructions stored on a non-transitory computer-readable medium for programming a device to perform the steps.

The steps include obtaining a plurality of services supported at the node (step 352); determining a bitmask to represent the plurality of services supported at the node, wherein the bitmask includes a starting service and each subsequent bit representing another service of the plurality of services and with each bit in the bitmask set based on the plurality of services supported at the node (step 354); and transmitting an advertisement to nodes in the Segment Routing network with a starting Service SID value and the bitmask based on the plurality of services supported at the node (step 356). The starting Service SID value corresponds to a first SID value in the bitmask and the subsequent bits represent other Service SIDs with their values relative to the starting Service SID value. The steps can also include, for a packet associated with a given service, transmitting the packet with a Segment Identifier (SID) stack having a Destination SID identifying a destination and a Service SID identifying the given service (step 58). Note, the term SID stack is used herein to note this can be SRv6-based or SR-MPLS-based.

The plurality of services can each include any of a Virtual Private Wire Service (VPWS) and a Flexible Cross Connect (FXC) service. The advertisement can include a Segment Identifier (SID) label stack having a Destination SID, a Service SID, and the bitmask. The advertisement can include a Segment Identifier (SID) label stack having a Destination SID, a Service SID, and the bitmask. The Destination SID can be any of a Node SID and an Anycast SID for multi-home nodes. The node can be in a multi-home configuration for a service, and wherein the advertisement includes an Anycast SID for the node supporting the service. For Active-Standby redundancy, the advertisement can include the Anycast SID with a high cost for a backup.

### SR-Optimized L3VPN service

Again, referring to FIG. 1, the present disclosure includes SR-optimized L3VPN that maintains the existing L3VPN semantics to (1) allow overlapping IP addresses to be used across multiple VPNs, (2) to associate routes with attributes. The present disclosure allows service providers to represent an L3VPN instance by one or more globally allocated service SID(s). The VPN route import/export is governed by the SID and allows the service provider to deploy extranet, hub-and-spoke, and mesh VPN topologies. RT-based import/export can also be used to support non-mesh L3VPN sites. Also, the present disclosure provides Active/Active Redundancy and multi-pathing using Segment Routing Anycast SIDs for Multi-Homed (MH) L3VPN sites.

Again, the objective of using Segment Routing is to greatly reduce the BGP overhead of the L3VPN control plane by at least two orders of magnitude and, in mesh scenarios, by up to four orders of magnitude. This scheme does not compromise the desired benefits of L3VPN and EVPN prefix advertisements (RT-5), such as support of multi-active redundancy on access, multi-pathing in the core, auto-provisioning and auto-discovery.

The crux of the present disclosure is how the routes are advertised. All VPN routes originating from a PE router 12 share the same tunnel encapsulation (ENCAP) to that PE router 12. Thus, the present disclosure proposes to advertise the tunnel encapsulation as the unique route, and the VPN prefixes as the attributes of the route. A new BGP message will be used to advertise the route and attributes in the new format. The goal is to pack as many VPN prefixes as possible in a single BGP message. About 10k VPNv4 prefixes can be packed in a 64k message. With SRv6 and uSID, the ENCAP will be an IPv6 prefix that contains both the Node SID for the PE router 12 as well as the Service SID representing the VPN. In common cases, this will be a /64 globally unique prefix.

A node can discover L3VPN services instances as well as the associated service SIDs on other nodes via configuration or auto-discovery. With the latter, the service SIDs can be advertised using BGP. As mentioned earlier, the service SIDs can be MPLS label (absolute value or index into an SRGB) or SRv6 uSID.

VPNv4/v6 prefixes and operation type, i.e., to inform BGP neighbors whether prefixes are added or deleted, can be advertised in a new TLV. The prefixes will be packed efficiently; prefix length followed by prefixes sharing the same prefix length. With this format, at least 12k VPNv4 prefixes can be encoded in the message. A single route will carry a large number of VPN prefixes (e.g., ~10k VPNv4 prefixes), instead of advertising one route per each VPN prefix. In the case of VPNv4, this results in approximately four orders of magnitude reduction in BGP messages. L3VPN Service SIDs may be allocated from an SRGB range dedicated only for L3VPN services.

Each PE router 12 advertises, via IGP/BGP, (1) a regular Node SID to be used by the PE router 12 when an L3VPN service is attached to local Single-Home sites, and/or (2) an Anycast SID per Multi-Home site when an L3VPN service is attached to the Multi-Home (MH) site. For example, the PE routers 12-3, 12-4 could advertise a Node SID for an L3VPN associated with the CE 5, CE4, respectively. For MH, the PE routers 12-5, 12-6 can advertise an Anycast SID for an L3VPN associated with the CE2. With the use of anycast SID per MH site, shared by PEs attached to the site, there is no need to implement any BGP PIC techniques at the L3VPN layer, as the routing convergence relies on the underlay of SR. The Data plane can be MPLS or SRv6. That is, thanks to the SR anycast SID capability, the present disclosure inherent provides Active-Active multi-homing support.

An L3VPN instance is associated with a Service SID that is unique within the L3VPN domain. A node can advertise service SID(s) of the L3VPN instance(s) that it is associated with via BGP for auto-discovery purpose. In the case of SR-MPLS, a service SID can be carried as a range of absolute values or an index into an Segment Routing Global Block (SRGB), and in the case of SRv6, a service SID can be carried as uSID in BGP updates. The objective is to pack information about all L3VPN service instances supported (at the time of sending update) on a transmitting node in single BGP update so as to reduce the amount of overall BGP update messages in a network.

The proposed solution can also be applicable to EVPN control plane without compromising its benefits such as multi-active redundancy on access, multipathing in the core, auto-provisioning and auto- discovery, etc.

In the proposed approach, a L3VPN instance is represented by a SID regardless of the number of service termination points. A SID identifying a L3VPN instance (we call it L3VPN Service SID in the rest of the document) can be an: (1) MPLS label for SR-MPLS or (2) uSID (micro SID) for SRv6 representing network function associated with a VPLS instance. In the data packets, the service SID uniquely identify the L3VPN service in an SR domain.

### Redundancy Using anycast SID

An Anycast SID per MH Site is configured on all PE routers 12-1, 12-2 and 12-5, 12-6 attached to the MH site, such as the CE routers CE1, CE2. These anycast SIDs are advertised via IGP/BGP for reachability. Each PE router 12-1, 12-2 and 12-5, 12-6 attached to the MH site, advertises the same anycast SID to allow other nodes to discover the membership (auto-discovery). L3VPN routes associated with an MH site can be advertised as a single IPv6 route containing both Anycast SID of the egress PE and service SIDs, the case of uSIDs. Multi-pathing/Fast convergence achieved using the same mechanisms used for anycast SID. A/S redundancy is the same as the A/A model except that the backup egress PE router advertises its route with a higher cost than the primary egress PE router.

### SID label stack

The following table illustrates a SID label stack for an SR-optimized L3VPN service (with the bottom being the Layer 3 (L3) packet).

| |
|---|
| Destination SID - could be a destination Node SID or an Anycast SID |
| Service SID |
| L3 Packet |

The SID(s) to reach destination: depends on the intent of the underlay transport:
IGP shortest path: node SID of the destination. The destination can belong to an anycast group. IGP path with intent: Flex-Algo SID if the destination can be reached using the Flex-Algo SID for a specific intent (e.g., low latency path). The destination can belong to an anycast group. SR policy (to support fine intent): a SID-list for the SR policy that can be used to reach the destination.

Service SID: The SID that uniquely identifies a L3VPN instance in an SR domain.

### Multi-pathing

Packets destined to a MH CE is distributed to the PE nodes attached to the CE for load-balancing purpose. This is achieved implicitly due to the use of anycast SIDs for both ES as well as PE attached to the ES. Traffic destined to CE2 is distributed via PEs 12-5, 12-6.

### Mass service withdrawal

On a node failure, IGP/BGP will converge. Techniques like Bidirectional Forwarding Detection (BFD) can be deployed for fast detection of failure. On PE-CE link failure, the PE node withdraws the route to the corresponding ES in BGP in order to stop receiving traffic to that ES.

With MH case with anycast SID, upon detecting a failure on PE-CE link, a PE node may forward incoming traffic to the impacted ES(s) to other PE nodes part of the anycast group until it withdraws routes to the impacted ES(s) for faster convergence. For example, in FIG. 1, assuming PEs 12-5, 12-6 are part of an anycast group, upon link failure between PE 12-5 and CE2, PE 12-5 can forward the received packets from the core to PE 12-6 until it withdraws the anycast SID associated with the MH site.

### Process

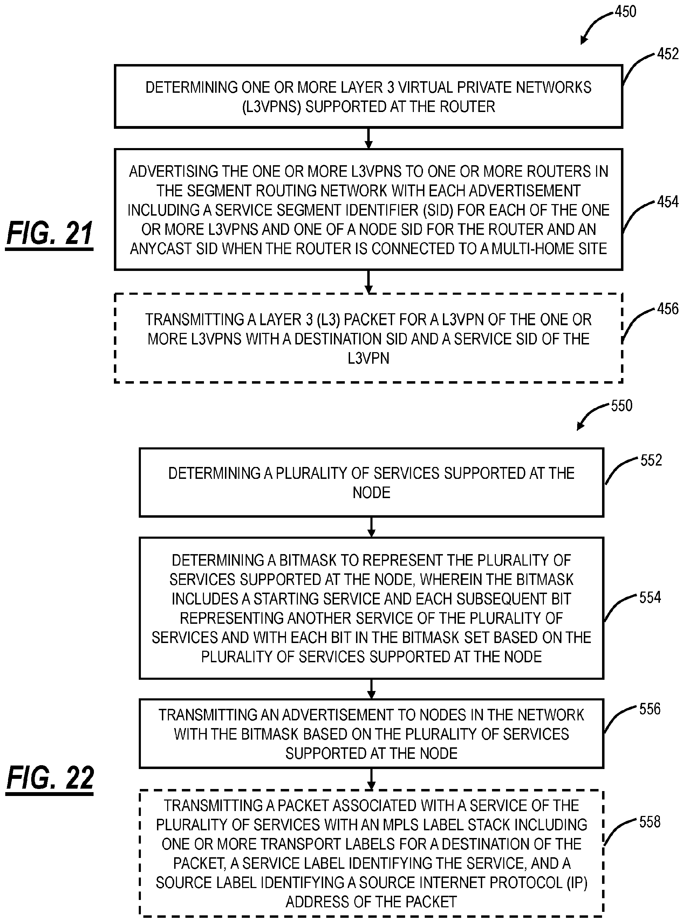

FIG. 21 is a flowchart of a Segment Routing L3VPN process 450. The process 450 can be implemented as a method having steps, via the node 12 configured to implement the steps, and as instructions stored on a non-transitory computer-readable medium for programming a device to perform the steps.

The steps include determining one or more Layer 3 Virtual Private Networks (L3VPNs) supported at the router (step 452); and advertising the one or more L3VPNs to one or more routers in the Segment Routing network with each advertisement including a service Segment Identifier (SID) for each of the one or more L3VPNs and one of a node SID for the router and an Anycast SID when the router is connected to a Multi-Home site (step 454). The steps can also include transmitting a Layer 3 (L3) packet for an L3VPN of the one or more L3VPNs with a destination SID and a service SID of the L3VPN (step 456). The destination SID is one of a node SID for a destination router or an Anycast SID when the destination router is connected to a Multi-Home site.

The advertisement can include encapsulation as an Internet Protocol version 6 (IPv6) prefix containing both the node SID for the PE and the service SID, and wherein prefixes are treated as attributes of a route. The advertising can be via Border Gateway Protocol (BGP). The advertisement can include a plurality of L3VPN prefixes, including several thousand. This is key to reduce the control plane overhead. L3VPN prefixes, along with operation type, can be advertised via a Type-Length-Value (TLV).

### Benefits

As described herein, the present disclosure supports a reduction in BGP overhead for the L3VPN control plane by two to four orders of magnitude. This eliminates the need for RDs and RTs associated with the current L3VPN architecture. This leads to operational simplicity. The present disclosure support Anycast SID provisioning, one per MH Site, for simplicity in supporting the Active-Active and Single-Active redundancy model. There is no need for any overlay support for redundancy and fast convergence and redundancy at the overlay (EVPN/BGP) layer. Of note, the Anycast SID per MH site ensures the underlay (SR) converges with no need for any overlay convergence.

### Interworking

Interworking between old and new technologies is via a gateway (GW) that understands both old and new technologies. For the gateway, the interworking working function can reside on any node that can act as a GW converting control plane messages from/to old/new technologies and communicating with nodes supporting only either old or new technologies. A node 12 can support the old technologies and act as the GW to distribute the routes coming from L2VPN SAFI or EVPN to peers understanding the new technologies and vice-versa (it is bidirectional, from/to old/new), this is what EVPN did to interwork with L3VPN old SAFI stuff.

### Network

Referring back to FIG. 1, assume the various nodes 12 (labeled as nodes 12-1 -12-6) are in a classical MPLS network 14 as well as various Customer Edge (CE) nodes (labeled CE1 - CE5). The CE nodes include a CE node CE2 in an Active/Active LAG 16, and a CE node CE1 in an Active/Active LAG 18 configuration. Of note, those skilled in the art will recognize the network 10 is presented for illustration purposes, and various configurations are possible. The PE nodes 12 are configured to use IP addresses for MAC learning (i.e., which source (CE) MAC address in the received L2 packet is associated with which PE node) instead of using EVPN Route Types 1, 2, 3 and 4.

Note, as described herein, "classical MPLS" transport refers to the ability to carry traffic over Label Switched Paths (LSPs) established via LDP, RSVP-TE, and/or BGP-LU.

### Label stack

The following table illustrates a label stack for a service.

| |
|---|
| Transport label |
| Service label |
| Source IP address label |
| L2 Packet |

Each of the transport label, the service label, and the source IP address label are MPLS labels added to the L2 packet. The transport label is used to direct the packet to the destination. The service label for an ELAN uniquely identifies the ELAN, and the Source IP address label is an IP address used for DP MAC learning.

### Optimized ELAN service discovery

The ELAN service label is an MPLS label and it can be signaled by IGP or BGP for service auto discovery. For efficiency, the advertisement can include a bitmap of service labels it is configured with configured and a broadcast node IP address for BUM. The present disclosure contemplates the use of a bitmap for signaling. As is known in the art, a bitmap is a representation in which each bit in a sequence of bits corresponds to information; namely, a first-bit location corresponds to a specific start Service label, and each bit location that follows represents the following Service labels in sequence. Each bit in the bitmap is 1 to denote the inclusion of that Service label or 0 to denote exclusion. This enables a single advertisement to include multiple Service labels versus a single advertisement for each.

In the network 10, the nodes 12-1 to 12-6 each flood service labels they have been configured within IGP/BGP. The flooding information can be used to discover services configured on remote nodes and build p2mp flooding trees for L2 BUM traffic. It is possible to build inclusive p2mp flooding trees per service or aggregate inclusive for a group of service labels. Ingress replication per service could be used for broadcasting traffic using its broadcast IP address.

### Optimized ELAN service A/A redundancy

An Anycast IP address per Ether-Segment (ES) is configured on all nodes attached to an MH site, e.g., the CE2 attached to the nodes 12-5, 12-6 and the CE1 attached to the nodes 12-1, 12-2, and is flooded via IGP/BGP for reachability through the set of nodes connected to the MH site. Each node 12-1, 12-2, 12-5, 12-6 attached to the MH site will advertise the same anycast IP to allow other nodes to discover the membership, and perform DF election. Aliasing/Multipathing is achieved using the same mechanisms used with classical MPLS transport. For example, when the node 12-5 learns a MAC address from the CE2, it floods it to all other nodes 12, including the node 12-6, so each node 12 learns the address as reachable via the anycast IP address owned by the nodes 12-5, 12-6. The node 12-6 applies Split Horizon and hence does not send the packet back to the MH CE2, but treats the MAC as reachable via the MH CE. The Anycast IP address is placed in the Source IP address label.

### Optimized ELAN service data plane MAC learning

The MAC addresses are learned through the data plane against the source node's 12 IP address, encapsulated under the Service label in the L2 packet. For example, in FIG. 3, the node 12-3 learns a MAC address from the CE5 and floods it to all nodes 12 configured with the same Service label. The nodes 12-1, 12-2, 12-4, 12-5, 12-6 learn the MAC as reachable via the node 12-3 based on the source IP address included in the data packet.

### Optimized ELAN service ARP suppression

ARP packet requests and replies can be gleaned to learn IP/MAC binding for ARP suppression. ARP replies are unicast, however, flooding ARP replies can allow all nodes to learn the MAC/IP bindings for the destinations too.

### Optimized ELAN service mass withdrawal

Failure of one of the nodes 12 is handled via IGP/BGP convergence, and as such there is no need for any explicit MAC withdrawal mechanism. For example, on a failure, the node 12-5 can withdraw the anycast IP address associated with the site from IGP/BGP in order not to draw any traffic destined to the CE2. The node 12-5 can send the received L2 packet from the core to the other node 12-6 connected to the MH CE2 assuming nodes share the same anycast IP address and incoming transport label for fast convergence until the node 12-5 withdraws the anycast IP associated with the MH site from IGP/BGP.

### Optimized ELAN service multipathing

Packets destined to the MH CE2 connected to the nodes 12-5, 12-6 can be load-balanced (ECMP/UCMP) across the network 10 to the nodes 12-5, 12-6, given that it was **learnt** via the anycast IP owned by the nodes 12-5, 12-6.

### Optimized ELAN service benefits

MAC learning in the data plane yields fast convergence, fast MAC move and scale through conversational learning. This approach supports Active-Active multihoming, and multipathing, and ARP suppression. Advantageously, the network 10 can be based on classical MPLS transport, and does not mandate SR underlay. This is a significant benefit in terms of upgrading networks as only edge nodes need to be upgraded (ideal for brownfield - existing deployments). This approach also includes at least two order of magnitude scale improvements over legacy PWs. Also, this approach yields the benefits of anycast address (redundancy and fast convergence) as well as eliminates the need for DF election.

The following table illustrates a comparison of conventional EVPNs with the optimized ELAN described herein.

| **Protocol/Function** | **EVPN** | | **Optimized ELAN** |
|---|---|---|---|
| Service Discovery BUM traffic handling | EAD RT-1 per Service + RD + RTs | | One Route containing Bitmap of Services supported + Broadcast |
| | IMET RT-3 per Service + RD +RTs. | | Node label for BUM |
| | | | 10 K services per 100 nodes = 1 Route per node, Total = 100 BGP routes |
| | 10K services on 100 nodes = 20K routes per node, Total = 2 Million BGP routes. | | |
| MAC Learning | One RT-2 per MAC/IP | | DP mac learning |
| ARP suppression | 1 Million MAC routes = 1 Million BGP routes. | | 0 BGP routes. |
| | | | No MAC move handling. |
| | MAC move control plane complex logic. | | Conversational Learning. |
| | | | ARP suppression can be achieved via DP learning and flooding ARP replies. |
| | No conversational learning. | | |
| | ARP suppression use MAC/IP RT-2. | | |
| MH Handling | One Per ES EAD route + SH Label per MH Site. One RT-4 per MH site. | | One Anycast label per MH site. |
| | | | On ES down: Withdraw Anycast label. |
| | On | ES down, withdraw | |
| | | - Per ES EAD route. | |
| | | - Per EVI EAD routes. | |
| | | - X MAC routes. | |
| | | - RT-4. | |
| Convergence | Define overlay convergence, like: | | Depends only on underlay convergence. |
| | MASS-Withdraw. | | |
| | Overlay ECMP through Remote ESI. | | |
| | BGP-PIC for MAC routes. | | |

Also, the aforementioned benefits also apply to ETREE, ELINE, and L3VPN that are described as follows. This approach supports Active-Active multihoming, and multipathing, and ARP suppression. Advantageously, the network 10 can be based on classical MPLS transport, and does not mandate SR underlay. This is a significant benefit in terms of upgrading networks as only edge nodes need to be upgraded (ideal for brownfield - existing deployments).

### Optimized ETREE service discovery

Similar to the ELAN, the ETREE service MPLS label is signaled via IGP/BGP for service auto discovery such that a single service route contains the start of the service label and a bitmap of service labels configured and a broadcast IP address for BUM + Leaf Node IP for traffic from leaf. The nodes 12-1 to 12-6 floods the services labels they are configured with via IGP/BGP. The flooding information can be used to discover the services configured on a remote node, as well can help build p2mp flooding trees for L2 BUM traffic. It is possible to build inclusive p2mp flooding trees per service, or aggregate inclusive for a group of service labels. Ingress replication per service could be used for replicating traffic using a broadcast label.

### Optimized ETREE service A/A redundancy

. An Anycast IP address per Ether Segment is configured on all nodes 12-1, 12-2, 12-5, 12-6 attached to the MH site with leaf indication if the site is a leaf, and is flooded (by the node attached to the MH site) via IGP/BGP to advertise reachability. Upon receiving a flooding update from a root node, the leaf nodes forward the update to its local sites. Each node attached to the MH site will advertise the same anycast IP address, to allow other nodes to discover the membership and perform DF election. Aliasing/Multipathing is achieved using the same mechanisms used for anycast IP.

For example, when a node 12-5 learns a MAC address from a CE2 it floods it to all nodes 12 including the other node(s) 12-6 hosting the MH site so that other nodes can learn that the MAC address is reachable via the anycast IP address associated with the nodes 12-5, 12-6 hosting MH site. The node 12-6 applies Split Horizon and hence does not send the packet back to the MH CE2, but treats the MAC as reachable via the MH CE, as well forwards the MAC address to the local leaf site.

### Optimized ETREE data plane MAC learning

MAC addresses are learned through the data plane against the source leaf node's IP address encapsulated under the service label in the L2 forwarded packets. For example, when the node 12-3 learns a MAC address, it floods it to all nodes 12 configured with the same Service label. The nodes 12-1, 12-2, 12-4 learn the MAC address as reachable via the leaf node IP attached to the node 12-3 and hence do not forward it to their leaf site. The nodes 12-5, 12-6 learn the MAC as reachable via the source node IP address attached to node 12-3, and node 12-6 (DF) forwards the MAC address only to the root site.

### Optimized ETREE service ARP suppression

Similar to ELAN, ARP packet requests and replies can be gleaned to learn IP/MAC binding for ARP suppression. ARP replies are unicast, however, flooding ARP replies can allow all nodes to learn the MAC/IP bindings for the destinations too.

### Optimized ETREE service mass withdrawal

Node failure is detected via IGP/BGP convergence, and as such, there is no need to flood any explicit MAC withdrawal. On a link failure, the node 12-5 detecting the failure withdraws the IP address associated with the site from IGP/BGP in order not to attract packets destined to the MH site. On link failure between the node 12-5 and the CE2, the node 12-5 can send the received L2 packet from the core to other nodes 12-6 connected to the MH CE (node 12-5 using the node 12-5 label), for fast convergence until it withdraws the anycast IP address associated with the MH site.

### Optimized ETREE multipathing

A packet destined to the MH CE connected to the nodes 12-5, 12-6, will be load-balanced (ECMP/UCMP) across the core to nodes 12-5, 12-6, given that it was learned via anycast IP owned associated with nodes 12-5, 12-6.

### Optimized ETREE benefits

This approach signals a per Node leaf IP address to be used as a source node IP for traffic originating from leaf, and an anycast IP address with a leaf indication for an MH leaf site. This yields the benefits of data-plane MAC learning (fast convergence, fast MAC move, etc.) and scales through conversational learning. Again, the network 10 can be based on classical MPLS transport, and does not mandate SR underlay. This brings the benefit of A/A multihoming, and multipathing, and ARP suppression for leaf Multi-home site, and leverages the benefits of anycast IP, for redundancy and fast convergence and to discover nodes sharing the same anycast label to perform DF election.

### Optimized ELINE and FXC service discovery

An ELINE Service label is signaled via IGP/BGP for service auto discovery such that a service route contains a start Service label and a bitmap of service labels configured, or one service label and the start of normalized VID and bitmap of normalized VIDs configured as well as the local node IP address associated with ELINE Services. In the network 10 or other networks, tens of thousands of normalized VIDs can be configured between two service endpoints. With the existing mechanisms, tens of thousands of BGP EVPN EAD advertisements are required to signal the status of ES. With the proposed mechanism, few route updates are sufficient. In the network 10, the nodes 12-1 to 12-6 flood the service labels they are configured with via IGP/BGP. The flooding information can be used to discover the services configured on a given node.

The following table illustrates a label stack for an ELINE service.

| |
|---|
| Transport label |
| Service label |
| L2 Packet |

### Optimized ELINE and FXC service A/A or A/S

An Anycast IP address is configured per ES on all nodes 12-1, 12-2, 12-5, 12-6 attached to the MH site, flooded by IGP/BGP for reachability through the set of nodes connected to the MH site. Each node attached to the MH site will advertise the same anycast IP, to allow other nodes to discover the membership. A packet destined to the MH CE2 connected to the nodes 12-5, 12-6 will be ECMP across the network 10 to the nodes 12-5, 12-6, given that it was learned in the control plane via the transport LSP associated with the anycast IP owned by the nodes 12-5, 12-6.

### Optimized ELINE and FXC benefits

This approach greatly reduces the BGP Control Plane overhead of existing EVPN/VPWS and control plane messages will be at least two order of magnitude less than current EVPN. This removes the overhead of RDs and RTs associated with each EVPN route presenting a service. This further brings the benefit of A/A multihoming, and multipathing, for MH site. The present disclosure uses legacy transport, i.e., LDP, BGP-LU and RSVP-TE, i.e., does not require an SR in the SP underlay. Again, this is a benefit for brownfield deployments where only the edges need to be upgraded. This eliminates the need at all for implementing any sort of convergence and redundancy at the overlay (EVPN/BGP or LDP) layer. Further, this supports auto-discovery and single-sided service provisioning.

### Optimized L3VPN service scale concern

Existing L3VPN mechanisms suffer from scale concerns as the number of VPN routes increases in the network 10, as each L3VPN route advertisement is prepended with an 8 bytes RD to allow IP address space to be reused by multiple VPNs, associated with set of extended communities, i.e., RTs, associated with other attributes such as local-pref, MED, color, etc., and associated with a tunnel encapsulation, aka MPLS label.

### Optimized L3VPN service approach

The present disclosure can maintain the existing L3VPN semantics to (1) allow overlapping IP addresses to be used across multiple VPNs and (2) associate routes with attributes. This allows operators to represent an L3VPN instance by one or more globally allocated Service label(s). The VPN route import/export is governed by label and allows operator to deploy extranet, hub-and-spoke and mesh VPN topologies. RT-based import/export can also be used to support non-mesh L3VPN sites. This provides Active/Active Redundancy and multipathing using underlay anycast IPs for Multi-Homed (MH) L3VPN sites.

The proposed approach greatly reduces the BGP overhead of existing L3VPN control plane by at least two orders of magnitude and in mesh scenarios by up to four order of magnitude. Further, this does not compromise the desired benefits of L3VPN and EVPN prefix advertisement (RT-5), such as support of multi-active redundancy on access, multipathing in the core, auto-provisioning and auto-discovery.

The crux of the scheme is how the routes are advertised. The approach includes to advertise the ENCAP as the unique route. With SRv6 with label, the ENCAP will be an IPv6 prefix that contains both node label for the PE router as well as the service label representing the VPN. In common cases, this will be a /64 globally unique prefix. VPN prefixes will be the attributes of the route. A new BGP message will be used to advertise the route and attributes in the new format. The goal is to pack as many VPN prefixes as possible in a single BGP message. VPNv4/v6 prefixes along with operation type, i.e., to inform BGP neighbors whether prefixes are added or deleted, will be advertised in new TLV. About 12K VPNv4 prefixes can be packed in a 64K message. The prefix length followed by prefixes sharing the same prefix length will be packed in the message. L3VPN Service labels may be allocated from an SRGB range dedicated only for L3VPN service.

### Optimized L3VPN service A/A or A/S

Each node advertises (1) regular Node IP nexthop to be used by the node when L3VPN service is attached to local Single-Home sites and (2) Anycast IP per Multi-Home site when L3VPN service is attached to the Multi-Home (MH) site via IGP/BGP. With the use of anycast IP per MH site, shared by PEs nodes 12attached to the site, there is no need to implement any BGP-PIC techniques at the L3VPN layer, as the routing convergence relies on the underlay. L3VPN routes associated with an MH site will be advertised as a single IPv6 route containing both anycast IP of the egress PE and service labels. Multipathing/Fast convergence is achieved using the same mechanisms used for anycast IP.

### Optimized L3VPN benefits

This greatly reduces the BGP Control Plane overhead of existing L3VPN and EVPN. The control plane messages will be at least two to four order of magnitude less than the current L3VPN/EVPN. This also removes the overhead of RDs and RTs associated with each L3VPN/EVPN route presenting a service. Further, this brings the benefit of A/A multihoming, and multipathing, for MH site, and leverages benefits of anycast IP for Redundancy and fast convergence. Again, the present disclosure uses legacy transport, i.e., LDP, BGP-LU and RSVP-TE, i.e., does not require an SR in the underlay.

### Process

FIG. 22 is a flowchart of a process 550 for optimized L2/L3 services over a classical MPLS network. The process 550 contemplates implementation as a method, via a node 12, and as a non-transitory computer-readable medium having instructions stored thereon for programming a node in to perform steps.

The process 550 includes determining a plurality of services supported at the node (step 552); determining a bitmask to represent the plurality of services supported at the node, wherein the bitmask includes a starting service and each subsequent bit representing another service of the plurality of services and with each bit in the bitmask set based on the plurality of services supported at the node (step 554); and transmitting an advertisement to nodes in the network with the bitmask based on the plurality of services supported at the node (step 556).

The process 550 can further include transmitting a packet associated with a service of the plurality of services with an MPLS label stack including one or more transport labels for a destination of the packet, a service label identifying the service, and a source label identifying a source Internet Protocol (IP) address of the packet (step 558). The source label can be an anycast IP address for a Multi Home site. The process 50 can also further include transmitting a packet associate with a service of the plurality of services with an MPLS label stack including one or more transport labels for a destination of the packet, and a service label identifying the service.

The MPLS network utilizes Label Switched Paths (LSPs) to carry the plurality of services. The plurality of services can include an Ethernet Local Area Network (ELAN), an Ethernet Tree (ETREE), an Ethernet Private Line (ELINE), and/or a Layer 3 Virtual Private Network (L3VPN).

### Conclusion

It will be appreciated that some embodiments described herein may include or utilize one or more generic or specialized processors ("one or more processors") such as microprocessors; Central Processing Units (CPUs); Digital Signal Processors (DSPs): customized processors such as Network Processors (NPs) or Network Processing Units (NPUs), Graphics Processing Units (GPUs), or the like; Field-Programmable Gate Arrays (FPGAs); and the like along with unique stored program instructions (including both software and firmware) for control thereof to implement, in conjunction with certain non-processor circuits, some, most, or all of the functions of the methods and/or systems described herein. Alternatively, some or all functions may be implemented by a state machine that has no stored program instructions, or in one or more Application-Specific Integrated Circuits (ASICs), in which each function or some combinations of certain of the functions are implemented as custom logic or circuitry. Of course, a combination of the aforementioned approaches may be used. For some of the embodiments described herein, a corresponding device in hardware and optionally with software, firmware, and a combination thereof can be referred to as "circuitry configured to," "logic configured to," etc. perform a set of operations, steps, methods, processes, algorithms, functions, techniques, etc. on digital and/or analog signals as described herein for the various embodiments.

Moreover, some embodiments may include a non-transitory computer-readable medium having instructions stored thereon for programming a computer, server, appliance, device, processor, circuit, etc. to perform functions as described and claimed herein. Examples of such non-transitory computer-readable medium include, but are not limited to, a hard disk, an optical storage device, a magnetic storage device, a Read-Only Memory (ROM), a Programmable ROM (PROM), an Erasable PROM (EPROM), an Electrically EPROM (EEPROM), Flash memory, and the like. When stored in the non-transitory computer-readable medium, software can include instructions executable by a processor or device (e.g., any type of programmable circuitry or logic) that, in response to such execution, cause a processor or the device to perform a set of operations, steps, methods, processes, algorithms, functions, techniques, etc. as described herein for the various embodiments.

Although the present disclosure has been illustrated and described herein with reference to preferred embodiments and specific examples thereof, it will be readily apparent to those of ordinary skill in the art that other embodiments and examples may perform similar functions and/or achieve like results.

## Claims

1. A method (50) comprising steps of:
in a node (12) in a Segment Routing network (10) with the node including a plurality of ports (108) and a switching fabric between the plurality of ports, and for an Ethernet Virtual Private Network, EVPN-Virtual Private Local Area Network Service, VPLS, transmitting (52), by a port, a packet with a plurality of Segment Identifiers, SID, including a destination SID that identifies a destination node for the packet, a service SID that identifies an EVPN Instance, EVI, and a source SID that identifies one of the node and an Ethernet Segment, ES, that includes the node,
wherein the method further comprises the steps of:
receiving (54), by the port, a second packet with a second plurality of SIDs; and learning (56) a Media Access Control, MAC, address based on a second service SID and a second source SID, of the second packet, wherein
the source SID is an anycast SID when the node is in a multi-homed configuration in the ES along with one or more additional nodes of the Segment Routing network, wherein
the source SID is located after the service SID for the destination node to learn a source Media Access Control, MAC, address associated with the node.

2. The method as claimed in claim 1, wherein the node utilizes the second plurality of SIDs for data plane-based MAC learning in lieu of control plane learning.

3. The method as claimed in any one of claims 1 to 2, wherein the service SID is configured on every node in the Segment Routing network that are a member of the EVI.

4. The method as claimed in any one of claims 1 to 3, wherein the service SID is distributed via signaling in the Segment Routing network.

5. The method as claimed in any one of claims 1 to 4, wherein the destination SID is a multicast SID or a node broadcast SID for *Broadcast, Unknown, and Multicast, BUM, traffic.*

6. A network element configured to implement the method of any one of claims 1 to 5.

7. A network comprising a plurality of nodes (12) each configured to implement the method of any one of claims 1 to 5.

8. A non-transitory computer-readable medium comprising instructions that cause hardware to implement the method of any one of claims 1 to 5.

## Patentansprüche

1. Verfahren (50), das folgende Schritte umfasst:
in einem Knoten (12) in einem Segment Routing Netzwerk (10) mit dem Knoten, der eine Vielzahl von Anschlüssen (108) und eine Schaltstruktur zwischen der Vielzahl von Anschlüssen einschließt, und für einen Ethernet Virtual Private Network-, EVPN-Virtual Private Local Area Network Service, VPLS, Übertragen (52), durch einen Anschluss, eines Pakets mit einer Vielzahl von Segmentkennungen, SID, die eine Destinations-SID einschließen, die einen Destinationsknoten für das Paket identifiziert, einer Dienst-SID, die eine EVPN-Instanz, EVI, identifiziert, und einer Quell-SID, die eines von dem Knoten und einem Ethernet-Segment, ES, identifiziert, das den Knoten einschließt,
wobei das Verfahren weiter die folgenden Schritte umfasst:
Empfangen (54), durch den Anschluss, eines zweiten Pakets mit einer zweiten Vielzahl von SIDs; und Lernen (56) einer Media Access Control-, MAC-Adresse basierend auf einer zweiten Dienst-SID und einer zweiten Quell-SID, des zweiten Pakets, wobei
die Quell-SID eine Anycast-SID ist, wenn der Knoten in einer mehrfach vernetzten Konfiguration in dem ES gemeinsam mit einem oder mehreren zusätzlichen Knoten des Segment Routing Netzwerks ist, wobei
sich die Quell-SID nach der Dienst-SID für den Destinationsknoten befindet, um eine Quell-Media Access Control-, MAC-Adresse zu lernen, die dem Knoten zugeordnet ist.

2. Verfahren nach Anspruch 1, wobei der Knoten die zweite Vielzahl von SIDs zum Lernen auf Datenebene basiertem MAC anstelle von Lernen auf Steuerebene nutzt.

3. Verfahren nach einem der Ansprüche 1 bis 2, wobei die Dienst-SID in jedem Knoten in dem Segment Routing Netzwerk konfiguriert ist, die ein Mitglied der EVI sind.

4. Verfahren nach einem der Ansprüche 1 bis 3, wobei die Dienst-SID durch Signalisieren in dem Segment Routing Netzwerk verteilt wird.

5. Verfahren nach einem der Ansprüche 1 bis 4, wobei die Destination-SID eine Multicast-SID oder eine Knoten-Broadcast-SID für Broadcast, Unknown, und Multicast, BUM, Verkehr ist.

6. Netzwerkelement, das konfiguriert ist, um das Verfahren nach einem der Ansprüche 1 bis 5 umzusetzen.

7. Netzwerk, umfassend eine Vielzahl von Knoten (12), von denen jeder konfiguriert ist, um das Verfahren nach einem der Ansprüche 1 bis 5 umzusetzen.

8. Nichttransitorisches computerlesbares Medium, umfassend Anweisungen, die die Hardware veranlassen, das Verfahren nach einem der Ansprüche 1 bis 5 umzusetzen.

## Revendications

1. Procédé (50) comprenant les étapes consistant à :
dans un noeud (12) dans un réseau de routage de segment (10) avec le noeud incluant une pluralité de ports (108) et une matrice de commutation entre la pluralité de ports, et pour un réseau privé virtuel Ethernet, EVPN-service de réseau local privé virtuel, VPLS, transmettre (52), par un port, un paquet avec une pluralité d'identifiants de segment, SID, incluant un SID de destination qui identifie un noeud de destination pour le paquet, un SID de service qui identifie une instance EVPN, EVI, et un SID source qui identifie l'un du noeud et d'un segment Ethernet, ES, qui inclut le noeud,
dans lequel le procédé comprend en outre les étapes consistant à :
recevoir (54), par le port, un second paquet avec une seconde pluralité de SID ; et apprendre (56) une adresse Media Access Control, MAC, basée sur un second SID de service et un second SID source, du second paquet, dans lequel
le SID source est un SID anycast lorsque le noeud est dans une configuration multi-homed dans l'ES avec un ou plusieurs noeuds supplémentaires du réseau de routage de segment, dans lequel
le SID source est situé après le SID de service pour le noeud de destination pour apprendre une adresse Media Access Control, MAC, source associée au noeud.

2. Procédé selon la revendication 1, dans lequel le noeud utilise la seconde pluralité de SID pour l'apprentissage MAC basé sur le plan de données au lieu de l'apprentissage du plan de commande.

3. Procédé selon l'une quelconque des revendications 1 à 2, dans lequel le SID de service est configuré sur chaque noeud dans le réseau de routage de segment qui est membre de l'EVI.

4. Procédé selon l'une quelconque des revendications 1 à 3, dans lequel le SID de service est distribué par l'intermédiaire du signalement dans le réseau de routage de segment.

5. Procédé selon l'une quelconque des revendications 1 à 4, dans lequel le SID de destination est un SID de multidiffusion ou un SID de diffusion de noeud pour le trafic de diffusion, inconnu et multidiffusion, BUM.

6. Élément de réseau configuré pour mettre en oeuvre le procédé selon l'une quelconque des revendications 1 à 5.

7. Réseau comprenant une pluralité de noeuds (12) chacun configuré pour mettre en oeuvre le procédé selon l'une quelconque des revendications 1 à 5.

8. Support non transitoire lisible par ordinateur comprenant des instructions qui amènent un matériel à mettre en oeuvre le procédé selon l'une quelconque des revendications 1 à 5.
